# EUROPÄISCHE PATENTSCHRIFT

(11) **EP 2 296 181 B1**
(45) Veröffentlichungstag und Bekanntmachung des Hinweises auf die Patenterteilung: **13.11.2013**
(21) Anmeldenummer: 10009292.3
(22) Anmeldetag: 07.09.2010
(51) Int. Cl.: H01L 31/02, H01L 31/048

(54) **Anschlußdose, deren Verwendung in einem Solarpaneel und Herstellungsverfahren**
Connection socket, use of same in a solar panel and manufacturing method
Boîte de jonction, son utilisation dans un panneau solaire et procédé de fabrication

(30) Priorität: 08.09.2009 DE 102009040568
(43) Veröffentlichungstag der Anmeldung: 16.03.2011
(73) Patentinhaber: Yamaichi Electronics Deutschland GmbH, 85609 Aschheim-Dornach (DE)
(72) Erfinder: Quiter, Michael, 57482 Wenden (DE); Eberle, Erwin, 80687 München (DE)
(74) Vertreter: Müller-Boré & Partner Patentanwälte

(56) Entgegenhaltungen:
- EP-A2- 2 058 867
- DE-A1-102007 006 433
- DE-U1-202008 002 426

## Beschreibung

Die Erfindung betrifft eine Anschlußdose, eine Verwendung einer Anschlußdose, ein Solarpaneel und ein Verfahren zum Herstellen eines Solarpaneels.

Herkömmliche Solarmodule zur Erzeugung elektrischer Energie aus Sonnenlicht umfassen eine oder mehrere einzelne Solarzellen. Je nach gewünschter vom Solarmodul zur Verfügung zu stellenden Spannung und/oder Stromstärke werden einzelne Solarzellen innerhalb des Moduls parallel und/oder in Reihe geschaltet und damit zu Solarzellengruppen zusammengefaßt. Die Solarzellengruppen werden zu einem flachen Solarmodul zusammengefaßt. Die elektrischen Anschlüsse der Solarzellengruppen des Solarmoduls werden nach außen geführt. Bei partieller Verringerung der Bestrahlungsintensität durch Sonnenlicht auf einzelne Solarzellen bzw. Solarzellengruppen, beispielsweise durch Verschmutzung oder Schattenwurf, können unter anderem folgende Effekte auftreten:
(1) Eine (gleichmäßige) Verringerung der Bestrahlungsintensität innerhalb der zusammengeschalteten Solarzellengruppen führt zu einer Leistungsverminderung der jeweiligen Solarzellengruppe.
(2) Durch eine partielle Abschattung einer Solarzelle innerhalb einer Solarzellengruppe wirkt diese abgeschattete Solarzelle als Sperrdiode bzw. Widerstand innerhalb des Stromkreises der Solarzellengruppe, was zum einen dazu führen kann, daß die gesamte Solarzellengruppe keine elektrische Energie mehr liefern kann und zum anderen zu einer Beschädigung der abgeschatteten Solarzelle und damit zum dauerhaften Ausfall der Solarzellengruppe führen kann.

In jedem Fall können zwischen den herausgeführten Anschlüssen der Solarzellengruppen eines Solarmoduls, je nach Bestrahlungsintensität auf die einzelnen Solarzellen, unterschiedliche Spannungen anliegen. Eine Reihenschaltung der Solarzellengruppen durch entsprechende Schaltung der nach außen geführten Anschlüsse führt analog zu den oben genannten Problemen.

Um die mit der unterschiedlichen Bestrahlungsintensität der Solarzellen verbundenen Probleme zu vermeiden, werden herkömmlich sogenannte Bypass-Dioden verwendet, die elektrisch antiparallel zu den Solarzellengruppen geschaltet werden. Diese Bypass-Dioden haben die Wirkung, daß der Stromfluß durch das Solarmodul an Solarzellengruppen, welche eine nur geringe Leistung liefern, vorbei geleitet wird, d.h. die Anschlüsse dieser Solarzellengruppe eines Solarmoduls werden durch die Bypass-Diode kurz geschlossen und die entsprechende Solarzellengruppe dadurch überbrückt. Somit liefert eine solche Solarzellengruppe zwar keinen Anteil mehr zur Gesamtleistung des Solarmoduls, der Gesamtstromfluß durch das Solarpaneel ist jedoch im wesentlichen ungehindert und eine Beschädigung einzelner Solarzellen wird verhindert.

Solarpaneele, umfassen daher neben dem Solarmodul in der Regel eine elektrische Anschlußdose mit zumindest zwei Kontaktvorrichtungen und zumindest einer Bypass-Diode. Die Solarzellen in einem Solarmodul sind in der Regel zwischen zwei Glasplatte angeordnet und durch flache dünne Leiterbänder miteinander verbunden. Diese Leiterbänder werden durch Öffnungen in einer der Glasplatten aus dem Solarmodul heraus geführt und mit in der Anschlußdose angeordneten elektrischen Kontaktelementen kontaktiert. Das mit der Anschlußdose versehene und elektrisch verbundene Solarmodul wird als Solarpaneel bezeichnet.

Die Druckschrift EP 2 058 867 A1 offenbart eine Anschlußdose für ein Solarpaneel bestehend aus einem Gehäuse, einem Deckel, einem ersten Anschluß und einem zweiten Anschluß. Das Gehäuse umfaßt Seitenwände und eine obere Wand, die einen Innenraum definieren. Kontaktelemente durchdringen mindestens eine der Seitenwände, so daß die Kontaktelemente eine elektrische Verbindung von externen Elementen mit internen Kontakten, wie beispielsweise Lötfahnen, herstellen können. Die interne Kontakte sind zumindest teilweise außerhalb des Innenraums angeordnet, so daß die internen Kontakte eine Solarzelle elektrisch kontaktieren können.

Die Druckschriften DE 20 2008 002 426 U1 und DE 10 2007 006 433 A1 offenbaren Anschlußdosen für Solarmodule, bei denen elektrische Leiter der Solarmodule ins das Innere der jeweiligen Anschlußdose eingeführt werden, um im Inneren der Anschlußdose elektrisch kontaktiert zu werden.

Es ist eine Aufgabe der Erfindung, eine effiziente Herstellung eines Solarpaneels zu ermöglichen. Diese Aufgabe wird durch eine Anschlußdose mit den im Anspruch 1 angegebenen Merkmalen gelöst. Weiter wird diese Aufgabe durch eine Verwendung gemäß Anspruch 12, ein Solarpaneel gemäß Anspruch 13 und ein Verfahren zum Herstellen eines Solarpaneels gemäß Anspruch 14 gelöst. Bevorzugte Ausführungsformen ergeben sich aus den Unteransprüchen.

### Anschlußdose gemäß einem Aspekt

Ein Aspekt der Erfindung betrifft eine Anschlußdose für ein Solarmodul umfassend:
- eine Gehäusevorrichtung, wobei
   -- die Gehäusevorrichtung ausgelegt ist, mit einer Anordnungsseite an dem Solarmodul angeordnet zu werden, und
   -- die Gehäusevorrichtung zumindest eine Aufnahmeeinrichtung aufweist,
- zumindest eine Kontaktvorrichtung mit
   -- zumindest zwei Kontaktelementen und
   -- zumindest einer Diode, welche die zumindest zwei Kontaktelemente elektrisch kontaktiert,
wobei die zumindest eine Kontaktvorrichtung zumindest bereichsweise in der Aufnahmeeinrichtung aufgenommen ist und wobei die Kontaktelemente der Kontaktvorrichtung entlang einer Verlagerungsrichtung V, die mit dem Normalenvektor der Anordnungsseite einen Winkel kleiner 90 Grad einschließt, verlagerbar sind.

Vorteilhafterweise können die Kontaktelemente mit einer Vielzahl von unterschiedlichen Solarmodulen kontaktiert werden, wobei die Solarmodule auf der Anschlußseite angeordnete oder darin versenkt angeordnete elektrische Leiter aufweisen können. Zweckmäßigerweise sind die Kontaktelemente der Kontaktvorrichtung weiter entlang der Verlagerungsrichtung V relativ zur der Gehäusevorrichtung verlagerbar als der Abstand zwischen den elektrischen Leitern und der Oberfläche der Anschlußseite des Solarmoduls, an welchem die Anschlußdose befestigt werden soll, gemessen entlang der Verlagerungsrichtung V. Vorteilhafterweise muß lediglich ein Typ einer Anschlußdose bevorratet werden für verschiedenen zu bestückende Solarmodule mit unterschiedlichen Versenktiefen der elektrischen Leiter, was zu einem verringertem Lagerraumbedarf führt. Weiter vorteilhafterweise können Fertigungstoleranzen in einer Serie der zu bestückenden Solarmodule mittels der verlagerbaren Kontaktelemente in einfacher Weise ausgeglichen werden, so daß die Anforderungen an die Fertigungstoleranzen geringer sein können, so daß weniger Solarmodule als Ausschuß klassifiziert werden müssen.

Das Merkmal, daß die Gehäusevorrichtung ausgelegt ist, mit einer Anordnungsseite an dem Solarmodul angeordnet zu werden beinhaltet, daß wenn die Anordnungsseite der Anschlußdose an dem Solarmodul angeordnet ist, die Anschlußdose einen vorgegebenen Zweck erfüllt. Somit ist die Anordnungsseite an das Solarmodul strukturell bzw. gegenständlich angepaßt. Insbesondere ist die Anordnungsseite der Anschlußdose zumindest bereichsweise eben bzw. als ebene Fläche ausgebildet.

Die Aufnahmeeinrichtung der Gehäusevorrichtung ist ausgelegt, die Kontaktvorrichtung zumindest bereichsweise aufzunehmen. Das heißt, daß die Aufnahmeeinrichtung insbesondere als Öffnung bzw. Ausnehmung bzw. Hohlraum in der Gehäusevorrichtung ausgebildet ist und daß die Kontaktvorrichtung zumindest partiell oder vollständig im Inneren der Aufnahmeeinrichtung bzw. der Gehäusevorrichtung angeordnet ist. Mit anderen Worten wird die Kontaktvorrichtung zumindest bereichsweise oder vollständig von der Aufnahmeeinrichtung umfangen.

Die Kontaktvorrichtung umfaßt zumindest zwei Kontaktelemente, wobei die Anzahl der Kontaktelemente beispielsweise auch 3, 4, 5, 6, 7 ,8 ,9 usw., also jede natürliche Zahl N größer als 2, betragen kann. Jeweils zwei Kontaktelemente sind durch eine zugeordnete Diode elektrisch miteinander verbunden bzw. kontaktiert. Bevorzugt sind paarweise voneinander verschiedene Kontaktelemente miteinander elektrisch durch eine zugeordnete Diode kontaktiert, wobei die Anzahl der Dioden gleich N-1 ist, d.h. daß die Anzahl der Dioden beispielsweise 1, 2, 3, 4, 5, 6, 7, 8 usw. ist, wenn die Anschlußdose 2, 3, 4, 5, 6, 7, 8, 9 usw. Kontaktelemente umfaßt.

Es versteht sich, daß die einzelnen Kontaktelemente der Kontaktvorrichtung miteinander mechanisch starr verbunden oder relativ zueinander verlagerbar ausgebildet sein können.

Bevorzugt können die Kontaktelemente jeweils aus einem elektrisch leitfähigen Material ausgebildet sein, insbesondere einer Kupferlegierung. Die Kontaktelemente können mittels einer Verbindungseinrichtung miteinander mechanisch, insbesondere starr, verbunden sein, so daß die Kontaktelemente bevorzugt nur gemeinsam entlang der Verlagerungsrichtung V relativ zur Gehäusevorrichtung verlagerbar bzw. relativ zueinander nicht verlagerbar sind. Alternativ ist es auch möglich, daß die Kontaktelemente individuell verlagerbar sind. Vorzugsweise können die Kontaktelemente an bzw. auf einer Leiterplatte bzw. einer gedruckten Schaltung angeordnet sein. Insbesondere können die Kontaktelemente als elektrisch leitfähiger Bereich einer gedruckten Schaltung ausgebildet sein, wobei das elektrisch leitfähige Material der Leiterplatte zwischen den einzelnen Kontaktelementen entfernt ist, so daß die Kontaktelemente lediglich mittels der Dioden elektrisch verbunden sind. Die Leiterplatte bzw. die dadurch ausgebildete elektrische Schaltung ist bevorzugt entlang der Verlagerungsrichtung V verlagerbar.

Weiter bevorzugt können die Kontaktelemente zumindest bereichsweise aus einem elastisch rückstellfähigen Material ausgebildet sein bzw. damit verbunden sein. Insbesondere können die Kontaktelemente bereichsweise mittelbar oder unmittelbar an der Gehäusevorrichtung befestigt bzw. mit dieser verbunden sein, wobei die Kontaktelemente vorzugsweise unabhängig voneinander verlagerbar sind bzw. relativ zueinander verlagerbar sind.

Die Kontaktvorrichtung ist zumindest bereichsweise in der Aufnahmeeinrichtung derart aufgenommen bzw. gelagert, so daß die Kontaktvorrichtung zumindest bereichsweise verlagerbar ist bzw. so daß zumindest die Kontaktelemente der Kontaktvorrichtung verlagerbar sind. Die Verlagerung erfolgt dabei entlang einer Verlagerungsrichtung V, die im wesentlichen senkrecht auf der Anordnungsseite steht. Das heißt, daß die Verlagerungsrichtung V in dem Bereich der Anordnungsseite, der in etwa eben bzw. plan ausgebildet ist, um an dem Solarmodul angeordnet zu werden, im wesentlichen mit der Flächennormalen der Anordnungsseite zusammenfällt. Der Begriff "im wesentlichen" mit, Bezug auf die lineare Bewegung entlang Verlagerungsrichtung V beschreibt, daß neben einer geradlinigen, linearen Bewegung eine geringfügige Schwenk- bzw. Kippbewegung der Kontaktelemente bzw. von Bereichen der Kontaktvorrichtung auftreten kann. Der Begriff "im wesentlichen" beschreibt hierbei eine Abweichung der Verlagerungsrichtung V von weniger als etwa 30 Grad, weniger als etwa 20 Grad, bevorzugt weniger als etwa 10 Grad und weiter bevorzugt weniger als etwa 5 Grad bezogen auf die Flächennormale der Anordnungsseite. Insbesondere ist die Verlagerungsrichtung V im Rahmen der Meß- und Fertigungstoleranzen identisch zu der Flächennormalen der Anordnungsseite.

Bevorzugt sind zumindest die Kontaktelemente der Kontaktvorrichtung um etwa 2 mm bis etwa 10 mm, besonders bevorzugt um etwa 3 mm bis etwa 7 mm entlang der Verlagerungsrichtung V verlagerbar.

### Bevorzugte Ausführungsformen der Anschlußdose

Vorzugsweise steht die Verlagerungsrichtung V im wesentlichen senkrecht auf der Anordnungsseite. Es versteht sich aber, daß ein gleichwertiger technischer Effekt auftritt, wenn die Verlagerungsrichtung V mit dem Normalenvektor der Anordnungsseite einen bevorzugten Winkel von etwa 45 Grad, von etwa 30 Grad oder von etwa 15 Grad einschließt.

Vorzugsweise sind die Kontaktelemente in einer Initialposition im Inneren der Aufnahmeeinrichtung angeordnet. Insbesondere bevor sich die Anschlußdose bzw. die Kontaktvorrichtung sich einer Betriebsposition befindet ist die Kontaktvorrichtung im wesentlichen oder vollständig im Inneren der Aufnahmeeinrichtung. Weiter vorzugsweise ist die Kontaktvorrichtung in der Initialposition vollständig im Inneren der Aufnahmeeinrichtung angeordnet.

Der Begriff "im Inneren" beschreibt in diesem Zusammenhang ein Volumen, das von der Aufnahmeeinrichtung bzw. der Gehäusevorrichtung der Anschlußdose umgrenzt wird, d.h. ein Innenvolumen der Anschlußdose. Hierbei ist es nicht notwendig, daß die Aufnahmeeinrichtung bzw. die Gehäusevorrichtung eine geschlossene Außenfläche aufweist ist. Beispielsweise kann die Aufnahmeeinrichtung eine Ausnehmung bzw. Öffnung aufweisen, wobei der Begriff des "Inneren" das Innenvolumen der Aufnahmeeinrichtung derart beschreibt, als ob die Ausnehmung bzw. die Öffnung durch einen Deckel verschlossen wäre. In anderen Worten beschreibt der Begriff "im Inneren" das Innenvolumen einer idealerweise vollständig geschlossenen Anschlußdose. Die Kontaktvorrichtung kann auch derart angeordnet sein, daß ein Teil der Kontaktvorrichtung durch eine entsprechende Öffnung aus der Anschlußdose heraus ragt bzw. heraus geführt ist. Solange jedoch ein Teil bzw. Bereich der Kontaktvorrichtung, insbesondere derjenige Bereich, in bzw. an dem der elektrische Leiter anordenbar ist, innerhalb des Innenvolumens der Anschlußdose angeordnet ist, befindet sich dieser Bereich "im Inneren" der Anschlußdose. Der Begriff "im Inneren" beinhaltet somit sinngemäß z.B. auch "im wesentlichen im Inneren" bzw. auch "zumindest partiell im Inneren".

Der Begriff "Initialposition", wie er im Sinne der vorliegenden Erfindung verwendet wird, beschreibt beispielsweise den Zustand bzw. die Position eines oder mehrerer elektrischer Bauteile, insbesondere der Kontaktvorrichtung bzw. von Bestandteilen der Kontaktvorrichtung, wie beispielsweise den Kontaktelementen. Der Begriff "Initialposition", wie er im Sinne der vorliegenden Erfindung verwendet wird, beschreibt insbesondere diejenige Position der Kontaktvorrichtung, in der sich die Kontaktvorrichtung befindet, wenn die Anschlußdose nicht an dem Solarmodul angeordnet ist, d.h. insbesondere im Zustand der werksmäßigen Auslieferung. In anderen Worten ist die Kontaktvorrichtung bzw. sind die Kontaktelemente in der Initialposition noch nicht entlang der Verlagerungsrichtung V verlagert worden und die Kontaktelemente haben in der Initialposition keinen elektrischen und/oder mechanischen Kontakt mit den zugeordneten elektrischen Leitern des Solarmoduls.

Der Begriff "Betriebsposition", wie er im Sinne der vorliegenden Erfindung verwendet wird, beschreibt beispielsweise den Zustand bzw. die Position der vorgenannten elektrischen Bauteile, insbesondere der Kontaktvorrichtung bzw. von Bestandteilen der Kontaktvorrichtung, wie beispielsweise der Kontaktelemente. In der Betriebsposition üben die Kontaktelemente bevorzugt eine Kraft bzw. eine mechanische Spannung auf die elektrischen Leiter des Solarmoduls aus. Insbesondere wird in der Betriebsposition ermöglicht, daß ein oder mehrere elektrische Leiter des Solarmoduls die zugeordneten Kontaktelemente der Kontaktvorrichtung elektrisch kontaktieren. Der Begriff "Betriebsposition", wie er im Sinne der vorliegenden Erfindung verwendet wird, beschreibt somit insbesondere eine Position gemäß der die Kontaktelemente jeweils an den zugeordneten elektrischen Leitern des Solarmoduls anliegen bzw. angepreßt werden oder damit verlötet, verschweißt, vernietet, verklebt oder ähnliches sind. Insbesondere sind die Kontaktelemente durch eine Verlagerung relativ zur Gehäusevorrichtung entlang der Verlagerungsrichtung V von der Initialposition in die Betriebsposition überführbar. Diese Verlagerung kann beispielsweise durch ein lineares Verschieben und/oder Schwenken der Kontaktelemente erfolgen. Weiter bevorzugt kann die Verlagerung der Kontaktelemente von der Initialposition in die Betriebsposition ohne eine elastische und/oder plastische Verformung der Kontaktelemente erfolgen. Mit anderen Worten können die Kontaktelemente im wesentlichen verformungsfrei entlang der Verlagerungsrichtung V relativ zur Gehäusevorrichtung verlagert werden.

Vorteilhafterweise ragt kein Element bzw. Bereich der Kontaktvorrichtung, insbesondere die Kontaktelemente, über die Fläche der Anordnungsseite, insbesondere entlang der Verlagerungsrichtung V bzw. der Flächennormalen der Anordnungsseite, hinaus, so daß die Kontaktvorrichtung in der Initialposition vor mechanischer Beanspruchung und Beschädigung geschützt ist.

Vorzugsweise ist jedes der Kontaktelemente der Kontaktvorrichtung ausgelegt, in der Betriebsposition einen zugeordneten elektrischen Leiter des Solarmoduls zu kontaktieren.

Vorzugsweise sind die Kontaktelemente ausgehend von der Initialposition zu der Betriebsposition durch die Ebene der Anordnungsseite hindurch verlagerbar. Mit anderen Worten treten die Kontaktelemente durch die von der Anordnungsseite aufgespannte Ebene hindurch, d.h. durch die untere Oberfläche der virtuell geschlossenen Gehäusevorrichtung hindurch.

Vorzugsweise sind die Kontaktelemente der Kontaktvorrichtung ausgehend von der Initialposition zu einer Betriebsposition im wesentlichen linear entlang einer Verlagerungsrichtung V verlagerbar. Beispielsweise kann die Betätigungsposition ausgehend von der Initialposition durch Anlegen einer Kraft entlang der Verlagerungsrichtung V an der Kontaktvorrichtung bzw. den Kontaktelementen erreicht werden. Bei dem Übergang von der Initialposition zur Betriebsposition werden die Kontaktelemente bevorzugt im wesentlichen linear entlang der Verlagerungsrichtung V verlagert. Der Begriff "im wesentlichen" mit Bezug auf die lineare Bewegung entlang Verlagerungsrichtung V beschreibt, daß neben einer geradlinigen, linearen Bewegung eine geringfügige Schwenk- bzw. Kippbewegung der Kontaktelemente bzw. der Kontaktvorrichtung auftreten kann. Der Begriff "im wesentlichen" beschreibt hierbei eine Abweichung der tatsächlichen Verlagerung von weniger als etwa 30 Grad, weniger als etwa 20 Grad, bevorzugt weniger als etwa 10 Grad und insbesondere weniger als etwa 5 Grad von einer linearen Verlagerung entlang der Verlagerungsrichtung V. Der Begriff "im wesentlichen" umfaßt dabei den Begriff "identisch" bzw. "ohne Abweichung".

Vorzugsweise ist die zumindest eine Diode ausgehend von der Initialposition im wesentlichen linear entlang der Verlagerungsrichtung V zu der Betriebsposition verlagerbar. Mit anderen Worten kann die Diode relativ zu der Gehäusevorrichtung verlagert werden. Insbesondere ist die Diode entlang der Verlagerungsrichtung V verlagerbar, wenn die Gehäusevorrichtung an dem Solarmodul angeordnet bzw. befestigt ist. Weiter bevorzugt ist die Diode, welche die Kontaktelemente miteinander elektrisch verbindet, mit diesen starr verbunden, wodurch sich die relative räumliche Lage der Diode zu den Kontaktelementen nicht verändert. Insbesondere kann die starre Verbindung durch Verlöten, Verschweißen, Kleben und/oder Crimpen der Diode mit den Kontaktelementen erfolgen. Alternativ sind die Kontaktelemente vorzugsweise relativ zu der Diode verlagerbar.

Vorteilhafterweise wird die Diode zusammen mit den Kontaktelementen näher zu dem Solarmodul verlagert, so daß die Diode insbesondere in der Betriebsposition einen vorbestimmbaren bzw. vorbestimmten Abstand zum Solarmodul aufweist, unabhängig von verschiedenen Abmessungen des Solarmoduls. Da das Solarmodul in der Regel eine höhere Wärmeleitfähigkeit aufweist, als die Gehäusevorrichtung der Anschlußdose bzw. die die Anschlußdose umgebende Luft, kann die in der Diode entstehende Wärmeleistung vorteilhafterweise besser von der Diode abgeführt werden. Insbesondere wenn die Gehäusevorrichtung ausgegossen ist, beispielsweise mit einem Kunstharz, kann die zulässige Betriebshöchsttemperatur der Diode bei einer erhöhten abgegebenen Wärmeleitung eingehalten werden. Weiter vorteilhafterweise können die geometrischen Abstände zwischen der Diode und den die Diode umgebenden Elemente des Solarmoduls für verschiedene Ausführungsformen des Solarmoduls konstant gehalten werden, insbesondere der Abstand zwischen der Diode und dem Solarmodul entlang der Verlagerungsrichtung V kann für verschieden ausgeführte Solarmodule konstant sein. Folglich können die Bedingungen bei Ausgießen der Anschlußdose mit einem Kunstharz vorteilhafterweise für verschiedene Ausführungsform von Solarmodulen konstant sein, so daß eine gleichbleibende Qualität des Ausgießens erreicht wird, insbesondere im Hinblick auf die Vermeidung von in das Kunstharz eingeschlossenen Luftblasen. Alternativ kann die Diode relativ zu der Gehäusevorrichtung fixiert sein. Vorzugsweise können die Kontaktelemente relativ zu der Diode verlagerbar sein. Insbesondere kann die Diode zumindest bereichsweise von der Gehäusevorrichtung umfangen bzw. umschlossen sein. Gemäß einer bevorzugten Ausführungsform wird die Gehäusevorrichtung durch Spritzgießen eines Polymers ausgebildet, wobei die Diode zumindest bereichsweise durch das Polymer während des Spritzgießens umspritzt bzw. umgossen werden kann. Vorteilhafterweise kann die Diode in einfacher Weise sicher mit der Gehäusevorrichtung verbunden werden.

Vorzugsweise weist die Aufnahmeeinrichtung zumindest ein Führungselement und die Kontaktvorrichtung zumindest ein komplementäres Führungselement auf, wobei in der Initialposition und in der Betriebsposition das zumindest eine Führungselement mit einem zugeordneten komplementären Führungselement in Eingriff ist. Vorteilhafterweise wird die zumindest bereichsweise Verlagerung der Kontaktvorrichtung bzw. die Verlagerung der Kontaktelemente entlang der Verlagerungsrichtung V mittels des Führungselements bzw. der Führungselemente und des komplementären Führungselements bzw. der komplementären Führungselemente geführt, das heißt, daß eine dazu transversale Verlagerung, also eine Verlagerung senkrecht zur Verlagerungsrichtung V, gehemmt ist.

Vorzugsweise ist das Führungselement eine Nut oder eine Nase und das komplementäre Führungselement eine komplementäre Nase oder eine komplementäre Nut. Weiter vorzugsweise erstrecken sich die Nut, die Nase, die komplementäre Nase und/oder die komplementäre Nut im wesentlichen linear entlang der Verlagerungsrichtung V.

Vorzugsweise weist die Kontaktvorrichtung zumindest ein Federelement auf, welches ein rückstellfähiges, elastisch verformbares Material umfaßt. Bevorzugt ist das zumindest eine Federelement als Verbindungselement ausgebildet, welches eines der Kontaktelemente mittelbar oder unmittelbar mit der Gehäusevorrichtung verbindet. Bevorzugt ist das Federelement bzw. das Verbindungselement aus einem elektrisch leitfähigen, rückstellfähigen Material ausgebildet, beispielsweise einer Kupferlegierung oder Federstahl. Vorteilhafterweise wird die Kontaktvorrichtung bzw. werden die Kontaktelemente aufgrund einer Vorspannung des Federelementes in einer vorbestimmten räumlichen Position gehalten bzw. zu einer vorbestimmten räumlichen Position verlagert.

Vorzugsweise befindet sich das zumindest eine Federelement in der Initialposition in einem im wesentlichen elastisch entspannten Zustand. Mittels einer in Richtung der Verlagerungsrichtung V auf die Kontaktvorrichtung bzw. die Kontaktelemente wirkenden Kraft kann die Kontaktvorrichtung bzw. können die Kontaktelemente aus der Initialposition in die Betriebsposition überführt werden. In anderen Worten entspricht die Initialposition der Kontaktvorrichtung bzw. der Kontaktelemente vorzugsweisen derjenigen Position in der sich die Kontaktvorrichtung bzw. die Kontaktelemente befindet, wenn keinerlei externe Kraft an diese angelegt ist. Vorzugsweise befindet sich das zumindest eine Federelement in der Betriebsposition in einem im wesentlichen elastisch entspannten Zustand. Demzufolge befindet sich das Federelement in der Initialposition in einem elastisch gespannten Zustand. Weiter bevorzugt wird die Kontaktvorrichtung bzw. werden die Kontaktelemente durch ein Sicherungselement in der Initialposition festgelegt, wobei sich das zumindest eine Federelement in einem elastisch gespannten Zustand befindet. Die Kontaktvorrichtung ist bzw. die Kontaktelemente sind bevorzugt durch ein Sicherungselement, beispielsweise einem Sicherungsstift, einem Sicherungsband oder ähnlichem, in der Initialposition gehalten. Das Federelement übt bei nicht vorhandenem bzw. entferntem Sicherungselement eine Kraft in Richtung der Verlagerungsrichtung V aus, so daß die Kontaktvorrichtung von sich aus von der Initialposition in die Betriebsposition überführt wird. In anderen Worten entspricht die Betriebsposition der Kontaktvorrichtung bzw. der Kontaktelemente vorzugsweisen derjenigen Position in der sich die Kontaktvorrichtung befindet bzw. die Kontaktelemente befinden, wenn keinerlei externe Kraft an diese angelegt ist. Vorteilhafterweise wird die Betriebsposition der Kontaktvorrichtung bzw. der Kontaktelemente ohne weitere Hilfsmittel erreicht, wobei insbesondere ein vorbestimmbarer Anpreßdruck zwischen den Kontaktelementen und den zugeordneten elektrischen Leitern des Solarmoduls angelegt ist, so daß der elektrische Kontakt über die Betriebsdauer sicher hergestellt ist, insbesondere ohne verlöten, vernieten, verschrauben, etc. Der vorbestimmbare Anpreßdruck kann insbesondere dazu dienen die Kontaktelemente in einer vorbestimmten Position an den elektrischen Leitern des Solarmoduls zu halten, bis die Befestigung, d.h. das Verlöten etc., abgeschlossen ist.

Vorzugsweise ist das zumindest eine Federelement als Verbindungselement ausgebildet und zwischen einem der Anschlußelemente und einem der Kontaktelemente angeordnet. Bevorzugt ist dieses Anschlußelement mit dem Kontaktelement elektrisch und/oder mechanisch mittels des Federelements verbunden. Vorteilhafterweise kann das Federelement in einfacher und materialsparender Weise zusammen, insbesondere einstückig, mit dem Kontaktelement ausgebildet werden bzw. sein.

Vorzugsweise weist die Kontaktvorrichtung zumindest zwei Anschlußelemente auf. Die Anschlußelemente sind ausgelegt, die durch das Solarmodul erzeugte und mittels der Kontaktelemente abgegriffene elektrische Leistung einem externen Verbraucher zur Verfügung zu stellen.

Vorzugsweise sind die zumindest zwei Anschlußelemente ortsfest in der Gehäusevorrichtung angeordnet. Besonders bevorzugt ist die Gehäusevorrichtung im Bereich des ersten der zwei Anschlußelemente als erster Verbinder und im Bereich des zweiten der zwei Anschlußelemente als zweiter Verbinder ausgebildet, wobei das erste der zwei Anschlußelemente als Anschlußpol des ersten Verbinders und das zweite der zwei Anschlußelemente als Anschlußpol des zweiten Verbinders ausgebildet ist bzw. fungiert.

Vorzugsweise sind zumindest eines der Kontaktelemente, eines der Verbindungselemente und eines der Anschlußelemente zusammen einstückig ausgebildet, insbesondere als ein Blechstanzteil.

Vorzugsweise weisen die Kontaktelemente eine durchgängige Ausnehmung auf, so daß die Kontaktelemente in der Betriebsposition durch ein Befestigungsmittel, beispielsweise ein Lötmittel oder ein elektrisch leitfähiges Klebemittel, an dem zugeordneten elektrischen Leiter des Solarmoduls im Bereich der durchgängigen Ausnehmung festlegbar sind.

Bevorzugt wird die durchgängige Ausnehmung beim Verlöten der Kontaktelemente mit den zugeordneten elektrischen Leitern des Solarmoduls mit dem Befestigungsmittel, insbesondere dem Lötmittel oder dem elektrisch leitfähigen Klebemittel, gefüllt, wobei insbesondere wenn genügend Löt- bzw. Klebemittel verwendet wird, um die Öffnung vollständig zu füllen und einen Überschuß an Lötmittel auf der den elektrischen Leitern abgewandten Seite der Kontaktelemente aufzubringen, so daß aufgrund des Hintergreifens des Lötmittels eine stabile mechanische Verbindung zwischen den Kontaktelementen und den elektrischen Leitern ausgebildet ist.

Vorzugsweise ist die Gehäusevorrichtung einstückig ausgebildet. Weiter bevorzugt ist die Gehäusevorrichtung im wesentlichen flüssig zumindest bereichsweise auf die Kontaktvorrichtung aufgetragen und es ist eine innige Verbindung mit der Kontaktvorrichtung durch Abkühlen und/oder Aushärten der Gehäusevorrichtung erzeugt. Weiter bevorzugt ist die Gehäusevorrichtung durch Spritzgießen hergestellt. Wahlweise kann die Kontaktvorrichtung nach dem Fertigstellen der Gehäusevorrichtung durch Spritzgießen in der Aufnahmeeinrichtung angeordnet werden oder die Gehäusevorrichtung wird nach dem Vormontieren der Kontaktvorrichtung ausgebildet, wobei die Kontaktvorrichtung während des Spritzgießens zumindest bereichsweise von dem Material der Gehäusevorrichtung umschlossen wird und eine innige Verbindung mit diesem ausbildet. Vorteilhafterweise ist die Gehäusevorrichtung einfach herzustellen, wobei sich der zusätzliche Vorteil ergibt, daß die Kontaktvorrichtung in der Aufnahmeeinrichtung der Gehäusevorrichtung zumindest bereichsweise in der vorbestimmten räumlichen Position gehalten ist.

Vorzugsweise weist die Gehäusevorrichtung zumindest zwei Verbinder auf. Weiter vorzugsweise bilden die Anschlußelemente jeweils einen Anschlußpol eines zugeordneten Verbinders aus, insbesondere ist ein Anschlußelement als Anschlußpol des ersten der zwei Verbinder und ein anderes Anschlußelement als Anschlußpol des zweiten der zwei Verbinder ausgebildet.

Vorzugsweise weist die Anschlußdose einen ersten Verbinder auf, in welchen entlang einer ersten Einführrichtung E1 ein erster komplementärer Verbinder einführbar ist. Die Anschlußdose kann einen zweiten Verbinder aufweisen, in welchen entlang einer zweiten Einführrichtung E2 ein zweiter komplementärer Verbinder einführbar ist, wobei die erste Einführrichtung E1 und die zweite Einführrichtung E2 einen Winkel kleiner als 180 Grad einschließen. Weiter vorzugsweise beträgt der eingeschlossene Winkel zwischen der ersten Einführrichtung E1 und der zweiten Einführrichtung E2, etwa 0 Grad, etwa 90 Grad oder etwa 180 Grad, so daß der erste Verbinder und der zweite Verbinder an einer gemeinsamen Seite der Gehäusevorrichtung oder rechtwinklig zueinander oder an entgegengesetzten bzw. gegenüberliegenden Seiten der Gehäusevorrichtung angeordnet sind. Vorteilhafterweise kann durch die bevorzugte Auswahl der Anordnung des ersten Verbinders und des zweiten Verbinders an der Gehäusevorrichtung eine vorbestimmbare bevorzugte elektrische Leitungsführung zur Verbindung mehrerer Solarpaneele hergestellt werden, wobei die aufgrund der Verkabelung wirkenden Torsions- und Zugbelastungen an jedem einzelnen Solarpaneel aufgrund der speziellen Anordnung der Verbinder relativ zueinander minimiert ist.

Es versteht sich, daß anstelle des ersten Verbinders und/oder des zweiten Verbinders ein Anschlußkabel direkt mit der Gehäusevorrichtung verbunden sein kann, wobei ein elektrischer Anschlußleiter des Anschlußkabels mit dem zugeordneten Anschlußelement der Kontaktvorrichtung verbunden ist. Bevorzugt kann der Endbereich des Anschlußkabels von der Gehäusevorrichtung derart umfangen sein, daß die Verbindung zwischen Anschlußkabel und Gehäusevorrichtung feuchtigkeitsdicht ist. Entsprechend der Anordnung des mit den Anschlußkabel verbundenen Anschlußelements, erstreckt sich der Endbereich des Anschlußkabels im wesentlichen entlang der ersten Einführrichtung E1 oder der zweiten Einführrichtung E2.

Insbesondere kann die Anschlußdose mit einem Deckel versehen sein, um das Innere der Aufnahmeeinrichtung bzw. die Kontaktvorrichtung von der wetterseitigen Umgebung feuchtigkeitsdicht, insbesondere gemäß der Norm IP67, abzuschließen. Ferner kann das Innere der Aufnahmeeinrichtung in der Betriebsposition mit einem Kunstharz ausgegossen sein.

### Verwendung einer Anschlußdose

Ein Aspekt der Erfindung betrifft die Verwendung einer erfindungsgemäßen Anschlußdose und eines Solarmoduls zum Bereitstellen eines Solarpaneels, wobei die Anschlußdose an dem Solarmodul angeordnet wird, insbesondere an das Solarmodul geklebt wird und wobei die Kontaktelemente der Kontaktvorrichtung der Anschlußdose jeweils mit den zugeordneten elektrischen Leitern des Solarmoduls kontaktiert werden.

### Solarpaneel gemäß einem Aspekt

Ein weiterer Aspekt der vorliegenden Erfindung betrifft ein Solarpaneel umfassend:
- ein Solarmodul mit zumindest zwei elektrischen Leitern, und
- eine erfindungsgemäße Anschlußdose,
wobei die Anschlußdose an dem Solarmodul angeordnet ist und wobei die Kontaktelemente der Kontaktvorrichtung der Anschlußdose jeweils mit den zugeordneten elektrischen Leitern des Solarmoduls kontaktiert sind.

### Verfahren zum Herstellen eines Solarpaneels

Ein Aspekt der Erfindung betrifft ein Verfahren zum Herstellen eines Solarpaneels umfassend die Schritte:
- Bereitstellen einer erfindungsgemäßen Anschlußdose;
- Bereitstellen eines Solarmoduls mit zumindest zwei elektrischen Leitern;
- Aktivieren eines Haftmittels an der Anschlußdose und/oder an dem Solarmodul;
- Anordnen der Anschlußdose an dem Solarmodul; und
- Verlagern der Kontaktelemente der Kontaktvorrichtung der Anschlußdose von der Initialposition in die Betriebsposition, so daß die Kontaktelemente der Kontaktvorrichtung die zugeordneten elektrischen Leiter des Solarmoduls kontaktieren.

Bevorzugt kann das Verlagern der Kontaktelemente der Kontaktvorrichtung entlang der Verlagerungsrichtung V relativ zur Gehäusevorrichtung erfolgen, wenn die Anschlußdose an dem Solarmodul angeordnet bzw. befestigt ist. Beispielsweise können die Kontaktelemente, bevorzugt auch weitere Teile der Kontaktvorrichtung und/oder der Diode, durch ein Verschieben und/oder Verschwenken entlang der Verlagerungsrichtung V in die Betriebsposition überführt werden. Dabei kann das Verlagern zumindest bereichsweise in und zumindest bereichsweise außerhalb der Gehäusevorrichtung erfolgen. Mit anderen Worten können bevorzugt durch Anlegen einer Kraft an die Kontaktvorrichtung die Kontaktelemente und gegebenenfalls die Diode relativ zur Gehäusevorrichtung verlagert werden, insbesondere zumindest bereichsweise aus der Gehäusevorrichtung hinaus, um das Solarmodul zu kontaktieren. Daher kann das Kontaktieren der Kontaktelemente zeitlich nach der Anordnung der Anschlußdose an das Solarmodul erfolgen. Weiter bevorzugt erfolgt die elektrische Kontaktierung der Kontaktelemente mit dem zugeordneten elektrischen Leiter des Solarmoduls, beispielsweise eine ebene Kontaktfläche, welche an der anschlußseitigen Solarmodulplatte ausgebildet sein kann, lediglich durch die Verlagerung der Kontaktelemente. Mit anderen Worten ist es nicht notwendig elektrische Leiter des Solarmoduls zu positionieren, um eine Verbindung mit der Anschlußdose herstellen zu können.

Vorzugsweise werden die Kontaktelemente der Kontaktvorrichtung durch an den zugeordneten elektrischen Leitern des Solarmoduls befestigt, insbesondere durch Verlöten, Kleben, Schweißen, Crimpen, Schrauben etc..

### Figurenbeschreibung

Nachfolgend werden bevorzugte Ausführungsformen der vorliegenden Erfindung anhand der beigefügten Zeichnungen beispielhaft erläutert. Es zeigt
- Figur 1:: eine perspektivische Ansicht einer Ausführungsform eines Solarpaneels mit einer Anschlußdose;
- Figur 2:: eine andere perspektivische Ansicht der in Fig. 1 gezeigten Ausführungsform der Anschlußdose;
- Figur 3a-3c:: Schnitte entlang der Schnittlinie AA' durch die in der Fig. 1 gezeigten Ausführungsform der Anschlußdose in verschiedenen Positionen;
- Figur 4a-4c:: Schnitte entlang der Schnittlinie BB' durch die in der Fig. 1 gezeigten Ausführungsform der Anschlußdose in den Positionen, welche in den Figuren 3a-3c gezeigt sind; und
- Figur 5:: eine perspektivische Ansicht eines Kontaktelementes, eines Verbindungselementes und eines Anschlußelementes einer bevorzugten Ausführungsform einer Anschlußdose;

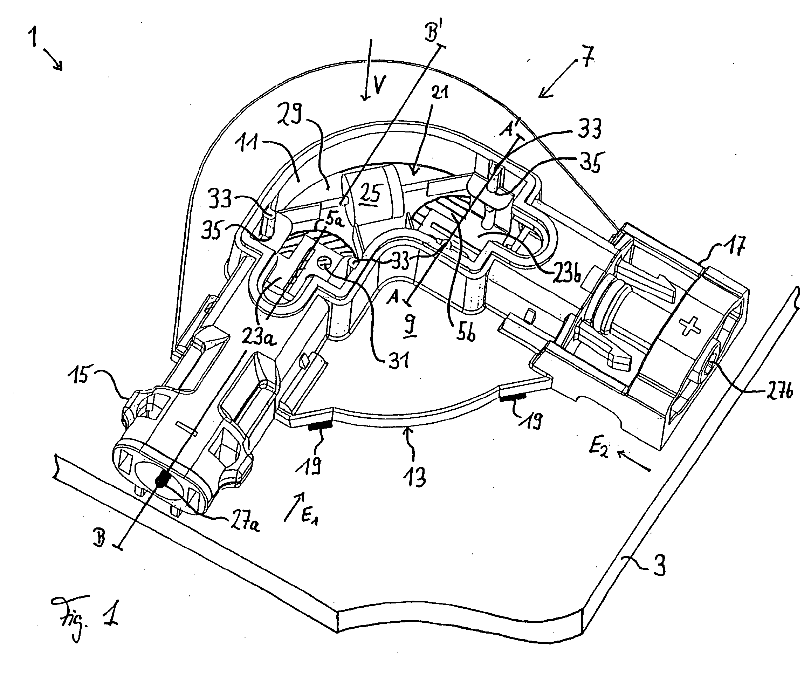

**Figur 1** zeigt eine perspektivische Ansicht einer Ausführungsform eines Solarpaneels 1 mit einem plattenförmigen Solarmodul 3, welches zumindest eine spannungserzeugende Solarzelle (nicht gezeigt) aufweist. Die von der Solarzelle erzeugte elektrische Leistung wird mittels elektrischer Leiter 5a, 5b in Form von Leiterbändern bzw. ebenen elektrischen Kontakten an der Anschlußseite des Solarmoduls 3 bereitgestellt. Die Anschlußseite des Solarmoduls 3 befindet sich in der gezeigten Ausführungsform auf der der Bestrahlungsseite gegenüberliegenden bzw. entgegengesetzten Seite. Es ist jedoch auch möglich, die elektrischen Leiter 5a, 5b auf der Bestrahlungsseite herauszuführen.

Eine Anschlußdose 7 ist an bzw. auf der Anschlußseite des Solarmoduls 3 an bzw. auf diesem angeordnet. Die Anschlußdose 7 weist eine Gehäusevorrichtung 9 auf, welche eine Aufnahmeeinrichtung 11, eine Anordnungsseite 13, einen ersten Verbinder 15, einen zweiten Verbinder 17 und einen Deckel (nicht gezeigt) umfaßt. Die Anordnungsseite 13 ist an der dem Solarmodul 3 zugewandten Seite der Anschlußdose 7, d.h. "unten", angeordnet. Die dem Solarmodul abgewandte Seite der Anschlußdose 7 wird dementsprechend als "oben" bezeichnet. Die Gehäusevorrichtung 9 ist mit der Anordnungsseite 13 an dem Solarmodul 3 angeordnet. Das heißt, daß die Gehäusevorrichtung 9 bzw. die Anschlußdose 7 an der Anordnungsseite 13 des Solarmoduls 3 mechanisch kontaktiert. Insbesondere sind sowohl die Anschlußseite des Solarmoduls 3 als auch die Anordnungsseite 13 der Anschlußdose 7 im wesentlichen eben ausgebildet, so daß die Anordnungsseite 13 im wesentlichen flächig und vollständig an dem Solarmodul 3 anliegt. Bevorzugt ist an der Anordnungsseite 13 ein Haftmittel 19, insbesondere ein Klebemittel, angeordnet, um die Anschlußdose 7 mittels des Haftmittels 19 an dem Solarmodul 3 zu befestigen.

Die in der Gehäusevorrichtung 9 ausgebildete Aufnahmeeinrichtung 11 nimmt bereichsweise eine Kontaktvorrichtung 21 auf. Die Kontaktvorrichtung 21 dieser bevorzugten Ausführungsform umfaßt zwei Kontaktelemente 23a, 23b und eine Diode 25, welche die zwei Kontaktelemente 23a, 23b elektrisch kontaktiert. Es versteht sich, daß die Kontaktvorrichtung auch drei, vier oder mehr Kontaktelemente umfassen kann. Die Kontaktvorrichtung 21 weist ferner zwei Anschlußelemente 27a, 27b auf, wobei ein Anschlußelement 27a als Anschlußpol des ersten Verbinders 15 und das andere Anschlußelement 27b als Anschlußpol des zweiten Verbinders 17 fungiert. Das heißt, daß der Anschlußpol des Verbinders 15 bzw. das Anschlußelement 27a, mit dem Anschlußelement des zweiten Verbinders 17 bzw. dem Anschlußelement 27b, über das Kontaktelement 23a, die Diode 25 sowie dazu parallel geschaltete Solarzelle bzw. Solarzellengruppe, und das Kontaktelement 23b elektrisch verbunden ist.

Die Kontaktvorrichtung 21 ist zumindest bereichsweise in der Aufnahmeeinrichtung 11 verlagerbar angeordnet. Insbesondere kann die Kontaktvorrichtung 21 von einer Initialposition in eine Betriebsposition verlagert werden. Dabei sind die Kontaktelemente 23a, 23b der Kontaktvorrichtung 21 entlang einer Verlagerungsrichtung V im wesentlichen linear verlagerbar. Beispielsweise kann die Verlagerungsrichtung senkrecht auf der Anordnungsseite 13 stehen. Mit anderen Worten könnten die Kontaktelemente 23a, 23b ausgehend von der Initialposition entlang der Verlagerungsrichtung V zu dem Solarmodul 3 hin verlagert werden, wenn die Anschlußdose 7 mit der Anordnungsseite 13 an dem Solarmodul 3 angeordnet ist bzw. befestigt ist. Die Gehäusevorrichtung 9 weist dabei im Bereich der Aufnahmeeinrichtung 11 einen Öffnungsbereich 29 zur Durchführung der Kontaktelemente 23a, 23b auf. Ausgehend von der Initialposition werden die Kontaktelemente 23a, 23b durch den Öffnungsbereich 29 hindurch geführt bzw. hindurch verlagert, um die Betriebsposition zu erreichen, wobei in der Betriebsposition die Kontaktelemente 23a, 23b jeweils einen zugeordneten elektrischen Leiter 5a, 5b des Solarmoduls 3 kontaktieren. Um die Kontaktelemente 23a, 23b an den zugeordneten elektrischen Leitern 5a, 5b des Solarmoduls 3 in der Betriebsposition festzulegen, können die Kontaktelemente 23a, 23b mit den elektrischen Leitern 5a, 5b verlötet werden. Dazu weisen die Kontaktelemente 23a, 23b bevorzugt jeweils eine durchgehende Ausnehmung 31 auf, so daß ein Lötmittel durch die durchgängige Ausnehmung 31 auf jeweils einen elektrischen Leiter 5a, 5b aufgebracht werden kann, so daß nach dem Abkühlen des Lötmittels die Kontaktelemente 23a, 23b mit dem jeweiligen elektrischen Leiter 5a, 5b elektrisch kontaktiert und mechanisch fixiert sind.

Um die zumindest bereichsweise und im wesentlichen lineare Verlagerung der Kontaktvorrichtung 21 entlang der Verlagerungsrichtung V zu führen, umfaßt die Aufnahmeeinrichtung 11 in der gezeigten Ausführungsform vier Führungselemente 33, welche in dieser bevorzugten Ausführungsform als Nase bzw. Vorsprung 33 ausgebildet sind. Dementsprechend weist die Kontaktvorrichtung 21 komplementäre Führungselemente 35 auf, die ausgelegt sind mit einem zugeordneten Führungselement 33 in Eingriff zu sein, so daß eine Verlagerung der Kontaktvorrichtung 21 entlang der Verlagerungsrichtung V möglich ist, während eine Verlagerung der Kontaktvorrichtung 21 entlang einer Verschiebungsrichtung, die im wesentlichen senkrecht zu Verlagerungsrichtung V steht, gehemmt ist. Bevorzugt ist das komplementäre Führungselement 35 als Nut 35 ausgebildet, wobei die Längserstreckung der Nut 35 parallel zur Verlagerungsrichtung V ist. Dementsprechend weist die Nase 33 eine Längserstreckung entlang der Verlagerungsrichtung V auf, so daß die Nase 33 in Eingriff mit der Nut 35 ist, und lediglich eine Verlagerung der Kontaktvorrichtung 21 entlang der Verlagerungsrichtung V ermöglicht.

Die in der Figur 1 gezeigte bevorzugte Ausführungsform der Anschlußdose 7 weist eine einstückig ausgebildete Gehäusevorrichtung 9 auf, wobei die Gehäusevorrichtung 9 mit der Aufnahmeeinrichtung 11 und den Führungselementen 33 sowie dem ersten Verbinder 15 und dem zweiten Verbinder 17 durch Spritzgießen hergestellt ist. Wahlweise ist es möglich, die Gehäusevorrichtung 9 durch Spritzguß auszubilden, wobei die Kontaktvorrichtung 21 nach dem Fertigstellen der Gehäusevorrichtung in der Aufnahmeeinrichtung 11 angeordnet wird. Alternativ kann die Gehäusevorrichtung 9 nach dem Vormontieren der Kontaktvorrichtung 21, insbesondere durch Spritzgießen, ausgebildet werden, wobei vorzugsweise die Kontaktvorrichtung 21 zumindest bereichsweise von dem Material der Gehäusevorrichtung 9 umgeben ist, um eine innige Verbindung zwischen der Kontaktvorrichtung 21 und der Gehäusevorrichtung 9 auszubilden.

Der erste Verbinder 15 der Anschlußdose 7 ist ausgelegt, um mit einem ersten komplementären Verbinder (nicht gezeigt) kontaktiert zu werden, wobei der erste komplementäre Verbinder entlang einer ersten Einführrichtung E1 zumindest bereichsweise in den ersten Verbinder 15 einführbar ist. Dementsprechend weist die Anschlußdose 7 ferner einen zweiten Verbinder 17 auf, der ausgelegt ist, um mit einem zweiten komplementären Verbinder (nicht gezeigt) kontaktiert zu werden, wobei der zweite komplementäre Verbinder entlang einer zweiten Einführrichtung E2 zumindest bereichsweise in den zweiten Verbinder einführbar ist.

Bevorzugt entspricht die Gestalt des ersten Verbinders 15 im wesentlichen der Gestalt des zweiten komplementären Verbinders und entspricht die Gestalt des zweiten Verbinders 17 im wesentlichen der Gestalt des ersten komplementären Verbinders. Es versteht sich, daß der erste Verbinder 15 und der zweite Verbinder 17 grundsätzlich zueinander in beliebiger geometrischer Anordnung an der Gehäusevorrichtung 9 ausgebildet sein können, so daß die erste Einführrichtung E1 und die zweite Einführrichtung E2 einen beliebigen Winkel zwischen etwa 0 Grad und etwa 180 Grad einschließen. Bevorzugt beträgt der eingeschlossene Winkel zwischen der ersten Einführrichtung E1 und der zweiten Einführrichtung E2, wie in Figur 1 gezeigt, etwa 90 Grad. Weiter bevorzugt kann der zwischen der ersten Einführrichtung E1 und der zweiten Einführrichtung E2 eingeschlossene Winkel 0 Grad oder 180 Grad betragen, so daß der erste Verbinder 15 und der zweite Verbinder 17 an einer gemeinsamen Seite der Gehäusevorrichtung 9 oder an entgegengesetzten bzw. gegenüberliegenden Seiten der Gehäusevorrichtung 9 angeordnet sind. Vorteilhafterweise kann durch die bevorzugte Auswahl der Anordnung des ersten Verbinders 15 und des zweiten Verbinders 17 an der Gehäusevorrichtung 19 bzw. der Anschlußdose 7 eine gewünschte elektrische Leitungsführung zur Verbindung mehrerer Solarpaneele ausgebildet werden, wobei die wirkenden Torsions- und/oder Zugbelastungen aufgrund der Verkabelung im Bereich der Verbinder minimiert ist.

Es versteht sich, daß anstelle des ersten Verbinders 15 und/oder des zweiten Verbinders 17 ein Anschlußkabel (nicht gezeigt) direkt mit der Gehäusevorrichtung verbunden sein kann, wobei ein elektrischer Anschlußleiter des Anschlußkabels mit dem zugeordneten Anschlußelement 27a, 27b der Anschlußdose 7 verbunden ist. Es versteht sich, daß sich die Endbereiche der Anschlußkabel entsprechend der ersten Einführrichtung E1 und der zweiten Einführrichtung E2 erstreckt, so daß das mit Bezug auf die Verbinder beschriebene analog auch für die Anordnung von Anschlußkabeln gilt. Bevorzugt kann der Endbereich des Anschlußkabels von der Gehäusevorrichtung 9 umfangen sein, wobei das Material der Gehäusevorrichtung 9 vorzugsweise in flüssigem Zustand an den Endbereich des Anschlußkabels appliziert bzw. aufgespritzt ist. Im Laufe eines Aushärtungs- bzw. Erstarrungsprozesses kann das Material der Gehäusevorrichtung 9 schrumpfen, so daß eine feuchtigkeitsdichte Verbindung zwischen dem Anschlußkabel und der Gehäusevorrichtung ausgebildet wird.

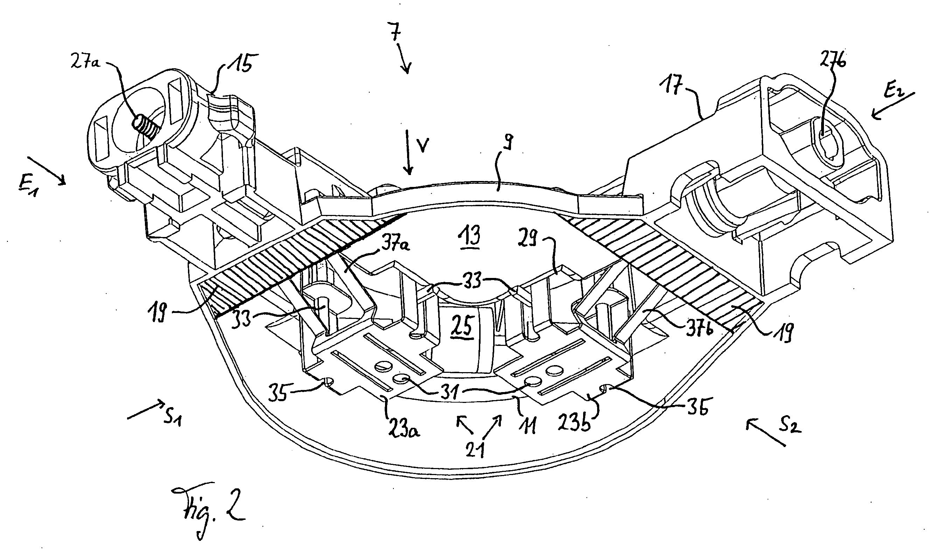

**Figur 2** zeigt eine andere perspektivische Ansicht der in Figur 1 gezeigten Ausführungsform der Anschlußdose 7. Die in der Figur 2 gezeigten Elemente entsprechen daher den in der Figur 1 gezeigten Elementen und sind dementsprechend mit den gleichen Bezugszeichen versehen. Aufgrund der in Figur 2 gewählten Perspektive weist die Blickrichtung zur Anordnungsseite 13 der Anschlußdose 7, das heißt, Figur 2 zeigt die Anschlußdose 7 von unten.

Die Anordnungsseite 13 der Gehäusevorrichtung 9 ist im wesentlichen eben und derart ausgelegt, um mittels des Haftmittels 19 an dem Solarmodul 3 feuchtigkeitsdicht angeordnet zu werden. Das Haftmittel 19 kann beispielsweise ein doppelseitig klebendes Band sein oder ein Klebemittel, welches im wesentlichen flüssig aufgetragen wird, insbesondere vollflächig auf der Anordnungsseite 13 aufgetragen wird, und nach einem Aushärtungs- bzw. Trockenprozess erstarrt, um die Gehäusevorrichtung 9 bzw. die Anschlußdose 7 an dem Solarmodul 3 zu befestigen. Die Figur 2 zeigt die Anschlußdose 7 in einem Zustand, in welchem die Kontaktvorrichtung 21 aus der initialen Position entlang der Verlagerungsrichtung V bereichsweise verlagert ist. Mit anderen Worten stehen die Kontaktelemente 23a, 23b gegenüber der im wesentlichen ebenen Anordnungsseite 13 entlang bzw. in Richtung der Verlagerungsrichtung V hervor. Im Gegensatz dazu sind die Anschlußelemente 27a, 27b nicht verlagerbar, da sie in der bzw. durch die Gehäusevorrichtung 9 in ihrer Position festgelegt sind, um als Anschlußpol des ersten Verbinders 15 und des zweiten Verbinders 17 zu fungieren. Um eine Verlagerung der Kontaktelemente 23a, 23b bei festgelegten Anschlußelementen 27a, 27b zu ermöglichen, sind die Kontaktelemente 23a, 23b über Verbindungselemente 37a, 37b als bevorzugter Ausführungsform der Federelemente 37a, 37b mit den Anschlußelementen 27a, 27b mechanisch verbunden. Bevorzugt sind die Verbindungselemente 37a, 37b aus einem elektrisch leitfähigem Material ausgebildet, so daß die Kontaktelemente 23a, 23b mittels der Verbindungselemente 37a, 37b auch elektrisch mit den Anspruchselementen 27a, 27b verbunden sind. Alternativ oder zusätzlich kann die elektrische Verbindung zwischen den Kontaktelementen 23a, 23b zu den zugeordneten Anschlußelementen 27a, 27b ebenfalls mittels einer separaten elektrischen Leitung, beispielsweise einem Kabel, ausgebildet sein. Es versteht sich, daß die Verbindungselemente alternativ zu der in Fig. 1 gezeigten Ausführungsform auch als im wesentlichen plastisch verformbare Verbindungselemente ausgebildet sein können, wobei dann bevorzugt ein alternatives Federelement, beispielsweise eine Spiral- oder Blattfeder derart an der Kontaktvorrichtung 21 und an der Gehäusevorrichtung 9 angeordnet bzw. befestigt ist, daß das Federelement aufgrund einer Vorspannung die Kontaktvorrichtung in einer vorbestimmbaren räumlichen Position hält bzw. zu einer vorbestimmbaren räumlichen Position verlagert.

In der in Fig. 2 gezeigten Ausführungsform sind die Verbindungselemente 37a, 37b um eine erste Schwenkachse S1 bzw. um eine zweite Schwenkachse S2 schwenkbar bzw. drehbar gelagert, wobei die Schwenkachsen S1, S2 senkrecht zu der Verlagerungsrichtung V stehen. Aufgrund der Schwenkbewegung der Verbindungselemente 37a, 37b kann die Verlagerungsrichtung V, in welche die Kontaktelemente 23a, 23b verlagert werden bzw. verlagerbar sind, von der Senkrechten bzw. Normalen der Anordnungsseite 13 abweichen, wobei der Winkel, welcher zwischen der Verlagerungsrichtung V und der Senkrechten bzw. Normalen zur Anordnungsseite 13 eingeschlossen wird, weniger als 30 Grad vorzugsweise weniger als 15 Grad und insbesondere weniger als 5 Grad beträgt.

Eine Verlagerungsbewegung der Kontaktelemente 23a, 23b parallel zur Erstreckungsrichtung der Anordnungsseite 13 wird durch die Führungselemente 33 der Gehäusevorrichtung 9 gehemmt, da die Führungselemente 33 mit den komplementären Führungselementen 35 der Kontaktelemente 23a, 23b in Eingriff stehen, wobei eine Verlagerung der Kontaktelemente 23a, 23b entlang einer Richtung parallel zu den Erstreckungsrichtungen der Anordnungsseite 13 gehemmt ist, während eine Verlagerung der Kontaktelemente 23a, 23b entlang einer Verlagerungsrichtung V, welche im wesentlichen senkrecht zur Anordnungsseite 13 steht, möglich ist.

Die Diode 25, welche die Kontaktelemente 23a, 23b miteinander elektrisch kontaktiert, ist vorzugsweise derart mit den Kontaktelementen 23a, 23b mechanisch verbunden, insbesondere durch Verlöten, Verschweißen, Kleben und/oder Crimpen, daß sich die relative Position der Kontaktelemente 23a, 23b zur Diode 25 im wesentlichen nicht verändert. Insbesondere sind die Kontaktelemente 23a, 23b mittels der Diode 25 miteinander starr mechanisch verbunden, wodurch die Diode 25 ebenfalls entlang der Verlagerungsrichtung verlagerbar in der Aufnahmeeinrichtung 11 angeordnet bzw. aufgenommen ist.

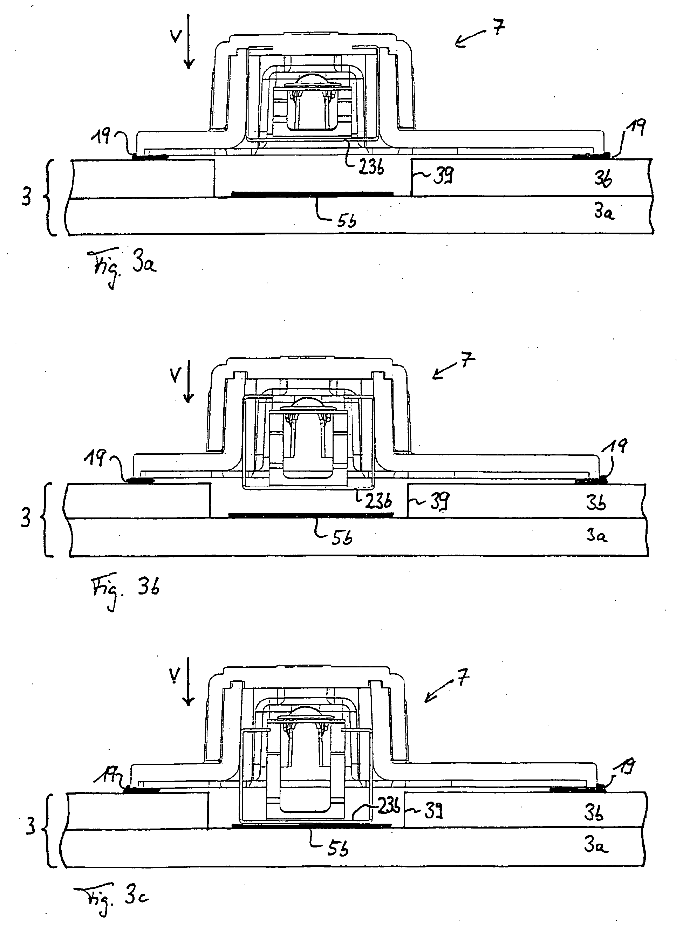

Die **Figuren 3a bis 3c** zeigen Schnitte entlang der Schnittlinie AA' durch die in der Figur 1 gezeigten Ausführungsform der Anschlußdose 7 in verschiedenen Positionen.

**Figur 3a** zeigt die Anschlußdose 7 in der Initialposition, wobei die Anschlußdose 7 an dem Solarmodul 3 angeordnet ist. Üblicherweise umfaßt das Solarmodul 3 eine bestrahlungsseitige Solarmodulplatte 3a und eine anschlußsseitige Solarmodulplatte 3b, zwischen welche die zumindest eine Solarzelle des Solarmoduls 3 angeordnet ist. Die anschlußseitige Solarmodulplatte 3b weist zumindest eine Ausnehmung bzw. Öffnung bzw. Bohrung 39 auf, in welcher bzw. durch welche die elektrischen Leiter 5b des Solarmoduls 3 zugänglich sind. Die Anschlußdose 7 ist mit der Anordnungsseite 13 durch das Haftmittel 19 an der anschlußseitigen Solarmodulplatte 3b des Solarmoduls 3 befestigt. Die Kontaktvorrichtung 21 befindet sich in der Initialposition, so daß das Kontaktelement 23b nicht mit dem elektrischen Leiter 5b des Solarmoduls 3 elektrisch kontaktiert.

Die **Figur 3b** zeigt die an dem Solarmodul 3 befestigte Anschlußdose 7, wobei die Kontaktierungsvorrichtung 21 sich nicht mehr in der Initialposition befindet, d.h. wobei das Kontaktelement 23b entlang der Verlagerungsrichtung V verlagert ist. Jedoch ist das Kontaktelement 23b noch nicht in elektrischem Kontakt mit dem zugeordneten elektrischen Leiter 5b des Solarmoduls 3.

**Figur 3c** zeigt die an dem Solarmodul 3 befestigte Anschlußdose 7 in der Betriebsposition, wobei das Kontaktelement 23b um eine hinreichend lange Strecke entlang der Verlagerungsrichtung V verlagert ist, um den elektrischen Leiter 5b des Solarmoduls 3 elektrisch zu kontaktieren. Die weiteren in den Figuren 3a bis 3c gezeigten Elemente entsprechen den in den Figuren 1 und 2 gezeigten Elementen und sind dementsprechend mit den gleichen Bezugszeichen versehen.

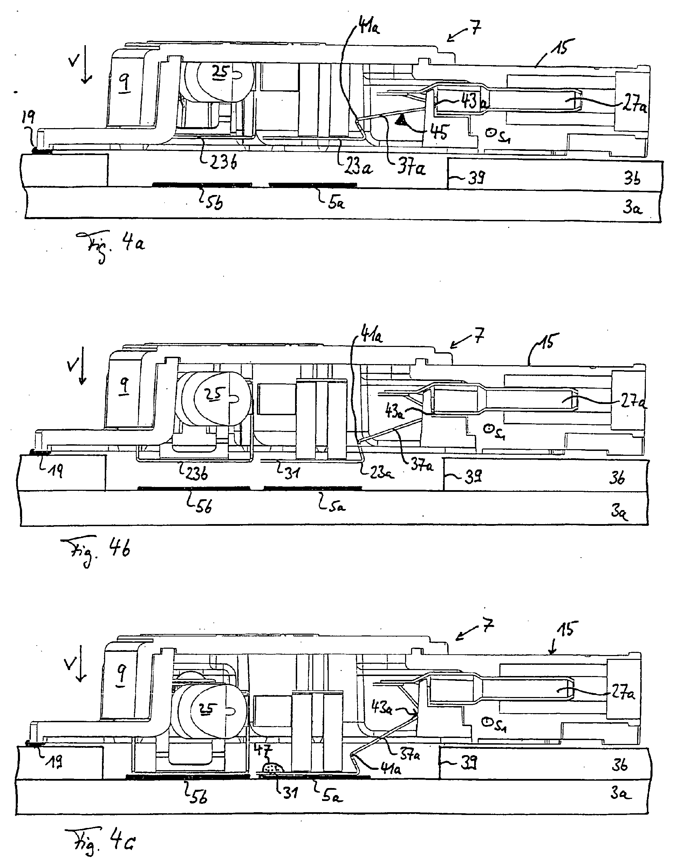

Die **Figuren 4a bis 4c** zeigen Schnitte entlang der Schnittlinie BB' durch die in der Figur 1 gezeigten Ausführungsform der Anschlußdose in den Positionen, welche in den Figuren 3a bis 3c gezeigt sind. In der **Figur 4a** ist die Anschlußdose 7 in der Initialposition gezeigt. In dieser Position befindet sich die Kontaktvorrichtung 21 vollständig innerhalb der Aufnahmeeinrichtung 11, das heißt, daß insbesondere die Kontaktelemente 23a, 23b nicht entlang der Verlagerungsrichtung V über die Anordnungsseite hinausragen. Die in der Figur 4a gezeigten Kontaktelemente 23a, 23b sind in dieser bevorzugten Ausführungsform zusammen mit den Verbindungselementen 37a, 37b einstückig, insbesondere aus einem elektrisch leitfähigen Material wie zum Beispiel einem Metallblech, ausgebildet. Das Verbindungselement 37a ist ferner an dem Anschlußelement 27a befestigt, wodurch das Verbindungselement 37a eine elektrische Verbindung zwischen dem Kontaktelement 23a und dem Anschlußelement 27a herstellt. In der gezeigten Ausführungsform umfaßt das Verbindungselement 37a einen ersten Gelenkbereich 41a und einen zweiten Gelenkbereich 43a. Dabei ist das Kontaktelement 23a mit dem Verbindungselement 37a um die erste Schwenkachse S1 über den ersten Gelenkbereich 41a gelenkig verbunden. Weiter ist der erste Gelenkbereich 41a des Verbindungselementes 37a mittels des zweiten Gelenkbereichs 43a schwenkbar gegenüber bzw. relativ zu dem Anschlußelement 27a ausgebildet. Das Verbindungselement 37a mit dem ersten Gelenkbereich 41a und dem zweiten Gelenkbereich 43a ist derart ausgebildet, daß eine Verlagerung des Kontaktelements 23a entlang der Verlagerungsrichtung, welche im wesentlichen der Senkrechten zur Anordnungsseite 13 entspricht, zu einer gegenläufigen Schwenkbewegung in dem ersten Gelenkbereich 41a mit Bezug auf den zweiten Gelenkbereich 43a bewirkt. Dadurch wird eine transversale Komponente der Verlagerungsrichtung V minimiert, welche aufgrund der Schwenkbewegung in einem Gelenkbereich von der Normalen zur Anordnungsseite 13 abweicht.

Es versteht sich, daß das Verbindungselement 37a aus einem elastischen verformbaren, rückstellfähigen Material ausgebildet sein kann, wobei sich das Verbindungselement 37a in der Initialposition in einem entspannten Zustand oder in einem vorgespannten Zustand befinden kann. Befindet sich das Verbindungselement 37a in der Initialposition in einem entspannten Zustand, so ist eine externe Kraft auf das Kontaktelement 23a oder das Verbindungselement 37a notwendig, um das Kontaktelement 23a entlang der Verlagerungsrichtung V zu bewegen bzw. zu verlagern. Bevorzugt befindet sich das Verbindungselement 37a in der Initialposition in einem vorgespannten Zustand, so daß das Kontaktelement 23a bzw. das Verbindungselement 37a durch ein Sicherungselement 45 an einer Verlagerung aufgrund der Rückstellkraft des elastischen vorgespannten Verbindungselements 37a und damit an einem Verlassen der Initialposition zu gehindert ist. Ein solches Sicherungselement 45 kann beispielsweise eine Feststellklammer, ein Splint, ein Klebeband, ein Sicherungskabel oder ein sonstiges Element sein, welches verhindern kann, daß sich das Verbindungselement 37a bewegt bzw. verlagert. Mit anderen Worten ist das Verbindungselement 37a in der Initialposition arretiert, wenn das Verbindungselement 37a aus einem elastisch verformbaren, rückstellfähigem Material besteht und in der Initialposition vorgespannt ist. Besonders bevorzugt sind alle Kontaktelemente 23a, 23b und Verbindungselemente 37a, 37b der Kontaktvorrichtung 21 gleich ausgebildet.

**Figur 4b** zeigt die Anschlußdose in einem Zustand, wobei sich die Kontaktvorrichtung 21 zwischen der Initialposition und der Betriebsposition befindet. Das Verbindungselement 37a ist nicht mehr durch das Sicherungselement 45 arretiert, wodurch das Verbindungselement 37a aufgrund der elastischen Rückstellkraft von dem vorgespannten Zustand in den entspannten Zustand übergeht. Infolgedessen ist das Kontaktelement 23a entlang der Verlagerungsrichtung V verlagert, wobei das Kontaktelement 23a gegenüber der Anordnungsseite 13 entlang der Verlagerungsrichtung V bzw. der Flächennormalen zur Anordnungsseite 13 hervorragt. Neben dem Kontaktelement 23a werden auch das Kontaktelement 23b und die Diode 25 der Kontaktvorrichtung 21 entlang der Verlagerungsrichtung V verlagert.

**Figur 4c** zeigt die Anschlußdose 7 in der Betriebsposition, wobei die Kontaktelemente 23a, 23b die zugeordneten Leiter 5a, 5b des Solarmoduls 3 elektrisch und mechanisch kontaktieren. Vorzugsweise befindet sich das Verbindungselement 37a auch in der Betriebsposition nicht in einem vollständig entspannten Zustand, wodurch die Kontaktelemente 23a, 23b auf die zugeordneten elektrischen Leiter 5a, 5b des Solarmoduls 3 einen Anpreßdruck ausüben können. Vorteilhafterweise ergibt sich dadurch ein verbesserter elektrischer Kontaktpunkt. Für den Fall, daß sich die Verbindungselemente 37a, 37b im Initialzustand in einem entspannten Zustand befinden, muß eine externe Kraft an die Kontaktelemente 23a, 23b und/oder die Verbindungselemente 37a, 37b angelegt werden, damit sich die Kontaktelemente 23a, 23b entlang der Verlagerungsrichtung in die Betriebsposition verlagern. Folglich befinden sich die Verbindungselemente 37a, 37b in der Betriebsposition in einem elastisch gespannten Zustand. Aufgrund der elastischen Rückstellkraft der Verbindungselemente 37a, 37b wirkt eine Kraft entgegen der Verlagerungsrichtung auf die Kontaktelemente 23a, 23b, wenn die externe Kraft, welche die Verlagerung in die Betriebsposition bewirkt hat, nicht mehr angelegt ist bzw. nicht mehr wirkt. Um die Kontaktvorrichtung 21 der Anschlußdose 7 in der Betriebsposition zu arretieren, werden die Kontaktelemente 23a, 23b vorzugsweise an den zugeordneten elektrischen Leitern 5a, 5b des Solarmoduls befestigt. Insbesondere können die Kontaktelemente 23a, 23b durch ein Lötmittel 47 mit den zugeordneten elektrischen Leitern 5a, 5b des Solarmoduls 3 verbunden sein. Bevorzugt weisen die Kontaktelemente 23a, 23b eine Ausnehmung bzw. durchgehende Öffnung 31 auf, welche beim Verlöten der Kontaktelemente 23a, 23b mit den zugeordneten elektrischen Leitern 5a, 5b des Solarmoduls mit dem Lötmittel 37 gefüllt wird. Insbesondere wenn genügend Lötmittel 47 auf die elektrischen Leiter 5a, 5b aufgebracht ist, um die Öffnung 31 im wesentlichen vollständig zu füllen und ein Überschuß an Lötmittel 47 die den elektrischen Leitern 5a, 5b abgewandte Seiten der Kontaktelemente 23a, 23b hintergreift, ist eine besonders stabile mechanische Verbindung zwischen den Kontaktelementen 23a, 23b und den elektrischen Leitern 5a, 5b gewährleistet.

Die weiteren in den Figuren 4a bis 4c gezeigten Elemente entsprechen den in den vorangehenden Figuren gezeigten Elementen und sind dementsprechend mit den gleichen Bezugszeichen versehen.

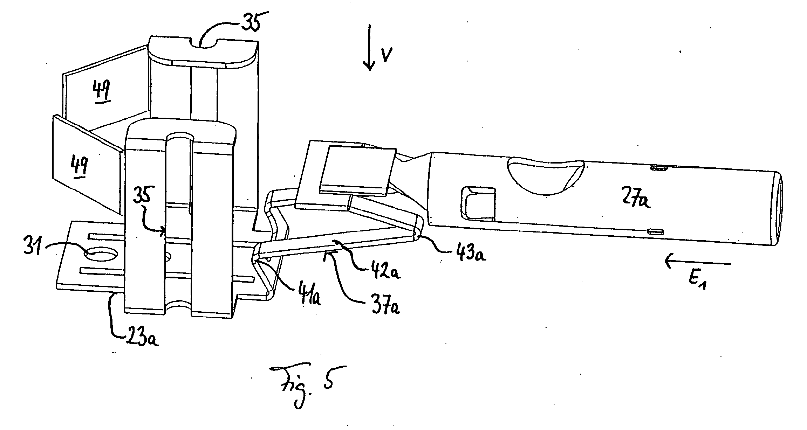

**Figur 5** zeigt eine perspektivische Ansicht eines Kontaktelementes 23a, eines Verbindungselementes 37a und eines Anschlußelementes 27a einer bevorzugten Ausführungsform einer Kontaktvorrichtung 21 einer Anschlußdose 7. Das Kontaktelement 23a und das Verbindungselement 37a sind einstückig aus einem elastisch verformbaren, rückstellfähigen Metallblech, insbesondere einer Kupferlegierung, ausgebildet. Das Kontaktelement 23a umfaßt zwei komplementäre Führungselemente 35, eine Ausnehmung 31, welche ausgelegt ist, ein Lötmittel zur Befestigung des Kontaktelementes 23a mit einem elektrischen Leiter eines Solarmoduls aufzunehmen, sowie zwei Lötfahnen 49, welche derart ausgelegt sind, um eine Diode (nicht gezeigt) daran zu befestigen, insbesondere daran festzulöten. Die komplementären Führungselemente 35 sind als Ausnehmung bzw. Schlitz in dem Kontaktelement 23 derart ausgebildet, um mit einem Führungselement einer Aufnahmeeinrichtung einer Anschlußdose derart in Eingriff zu gelangen, daß das Kontaktelement 23a im wesentlichen lediglich entlang einer Verlagerungsrichtung V im wesentlichen linear verlagerbar ist. Das Kontaktelement 23a ist mittels des Verbindungselements 37a, welches einstückig mit dem Kontaktelement 23a ausgebildet ist, an dem Anschlußelement 27a befestigt. Es versteht sich, daß das Kontaktelement 23a, das Verbindungselement 37a sowie das Anschlußelement 27a ebenfalls einstückig aus einem elektrisch leitfähigen Material ausgebildet sein können.

Das Verbindungselement 37a umfaßt drei Biegebereiche, wobei zwei Biegebereiche einen ersten Gelenkbereich 41a und ein weiterer Biegebereich einen zweiten Gelenkbereich 43a ausbilden. Zwischen dem ersten Gelenkbereich 41a und dem zweiten Gelenkbereich 43a ist ein Verbindungsbereich 42a angeordnet. Für den Fall, daß das Kontaktelement 23a relativ zu dem Anschlußelement 27a entlang der Verlagerungsrichtung V verlagert bzw. bewegt wird, erfolgt an dem ersten Gelenkbereich 41a eine Schwenkbewegung um die erste Schwenkachse S1 relativ zu dem Verbindungsbereich 42a, welche gegensinnig bzw. gegenläufig zu der Schwenkbewegung an dem zweiten Gelenkbereich 43a relativ zu dem Verbindungsbereich 42a erfolgt. Aufgrund der beiden Gelenkbereiche 41a, 43a wird eine Verlagerung des Kontaktelements 23a entlang der Verlagerungsrichtung V ermöglicht, ohne daß der Abstand zwischen dem Kontaktelement 23a und dem Anschlußelement 27a entlang der Einführrichtung E1, welche sich senkrecht zur Verlagerungsrichtung V erstreckt, verändert wird. Insbesondere wird ein Verschwenken des Kontaktelements 23a relativ zum Anschlußelement 27a verhindert.

Die vorliegende Beschreibung der bevorzugten Ausführungsformen ist nicht auf die oben beschriebenen jeweiligen Figuren beschränkt. Vielmehr gelten die Ausführungen zu den jeweiligen Figuren sinngemäß auch für die weiteren Figuren. Ebenso gelten die zu den Figuren gemachten Ausführungen auch für die vorangegangenen Aspekte und Ausführungsformen. Somit können mittels der zu den (jeweiligen) Figuren beschrieben Einzelmerkmale und/oder mittels der Einzelmerkmale der Aspekte und/der (Einzelmerkmale) Ausführungsformen weitere bevorzugte Ausführungsformen gebildet werden, wobei die Einzelmerkmale beliebig miteinander kombiniert werden können. So kann z.B. ein weiterer Aspekt der vorliegenden Erfindung eine Anschlußdose für ein Solarmodul betreffen, umfassend:
- eine Gehäusevorrichtung, wobei
   -- die Gehäusevorrichtung ausgelegt ist, mit einer Anordnungsseite an dem Solarmodul angeordnet zu werden, und
   -- die Gehäusevorrichtung zumindest eine Aufnahmeeinrichtung aufweist,
- zumindest eine Kontaktvorrichtung mit
   -- zumindest zwei Kontaktelementen und
   -- zumindest einer Diode, welche die zumindest zwei Kontaktelemente elektrisch kontaktiert,
wobei die zumindest eine Kontaktvorrichtung zumindest bereichsweise in der Aufnahmeeinrichtung aufgenommen ist und wobei die Kontaktelemente der Kontaktvorrichtung ausgehend von einer Initialposition entlang einer Verlagerungsrichtung V zu einer Betriebsposition durch die Ebene der Anordnungsseite hindurch verlagerbar sind.

### Bezugszeichenliste

- 1: Solarpaneel
- 3: Solarmodul
- 3a: bestrahlungsseitige Solarmodulplatte
- 3b: anschlußseitige Solarmodulplatte
- 5a, 5b: elektrischer Leiter des Solarmoduls 3
- 7: Anschlußdose
- 9: Gehäusevorrichtung
- 11: Aufnahmeeinrichtung
- 13: Anordnungsseite
- 15: erster Verbinder
- 17: zweiter Verbinder
- 19: Haftmittel
- 21: Kontaktvorrichtung
- 23a, 23b: Kontaktelement
- 25: Diode
- 27a, 27b: Anschlußelement
- 29: Öffnungsbereich
- 31: Ausnehmung
- 33: Führungselement, Nase
- 35: komplementäres Führungselement, Nut
- 37a, 37b: Federelement bzw. Verbindungselement
- 39: Ausnehmung in der anschlußseitigen Solarmodulplatte 3b
- 41a: erster Gelenkbereich des Verbindungselementes 37a
- 42a: Verbindungsbereich des Verbindungselementes 37a
- 43a: zweiter Gelenkbereich des Verbindungselementes 37a
- 45: Sicherungselement
- 47: Lötmittel
- 49: Lötfahne
- E1: erste Einführrichtung
- E2: zweite Einführrichtung
- S1: erste Schwenkachse
- S2: zweite Schwenkachse
- V: Verlagerungsrichtung

## Patentansprüche

1. Anschlußdose (7) für ein Solarmodul (3), umfassend:
- eine Gehäusevorrichtung (9), wobei
-- die Gehäusevorrichtung (9) ausgelegt ist, mit einer Anordnungsseite (13) an dem Solarmodul (3) angeordnet zu werden, und
-- die Gehäusevorrichtung (9) zumindest eine Aufnahmeeinrichtung (11) aufweist,
- zumindest eine Kontaktvorrichtung (21) mit
-- zumindest zwei Kontaktelementen (23a, 23b) und
-- zumindest einer Diode (25), welche die zumindest zwei Kontaktelemente (23a, 23b) elektrisch kontaktiert,
wobei die zumindest eine Kontaktvorrichtung (21) zumindest bereichsweise in der Aufnahmeeinrichtung (11) aufgenommen ist und wobei die Kontaktelemente (23a, 23b) der Kontaktvorrichtung (21) entlang einer Verlagerungsrichtung (V), die mit dem Normalenvektor der Anordnungsseite einen Winkel kleiner 90 Grad einschließt, verlagerbar sind,
**dadurch gekennzeichnet, daß**
die Kontaktelemente (23a, 23b) in einer Initialposition im vollständig Inneren der Aufnahmeeinrichtung (11) angeordnet sind, wobei die Kontaktelemente (23a, 23b) ausgehend von der Initialposition zu einer Betriebsposition durch die Ebene der Anordnungsseite (13) hindurch verlagerbar sind.

2. Anschlußdose (7) nach Anspruch 1, wobei die Verlagerungsrichtung (V) im wesentlichen senkrecht auf der Anordnungsseite (13) steht.

3. Anschlußdose (7) nach einem der vorigen Ansprüche, wobei jedes der Kontaktelemente (23a, 23b) der Kontaktvorrichtung (21) ausgelegt ist, in der Betriebsposition einen zugeordneten elektrischen Leiter (5a, 5b) des Solarmoduls (3) zu kontaktieren.

4. Anschlußdose (7) nach einem der vorigen Ansprüche, wobei die zumindest eine Diode (25) ausgehend von der Initialposition im wesentlichen linear entlang der Verlagerungsrichtung V zu der Betriebsposition verlagerbar ist.

5. Anschlußdose (7) nach einem der vorigen Ansprüche, wobei die Aufnahmeeinrichtung (11) zumindest ein Führungselement (33) und die Kontaktvorrichtung (21) zumindest ein komplementäres Führungselement (35) aufweist, wobei in der Initialposition und in der Betriebsposition das zumindest eine Führungselement (33) mit einem zugeordneten komplementären Führungselement (35) in Eingriff ist.

6. Anschlußdose (7) nach einem der vorigen Ansprüche, wobei die Kontaktvorrichtung (21) zumindest zwei Anschlußelemente (27a, 27b) aufweist, wobei die zumindest zwei Anschlußelemente (27a, 27b) insbesondere ortsfest in der Gehäusevorrichtung (9) angeordnet sind.

7. Anschlußdose (7) nach einem der vorigen Ansprüche, wobei die Kontaktvorrichtung (21) zumindest ein Federelement (37a, 37b) aufweist, welches ein rückstellfähiges, elastisch verformbares Material umfaßt,
wobei sich das zumindest eine Federelement (37a, 37b) in der Initialposition in einem im wesentlichen elastisch entspannten Zustand befindet oder
wobei sich das zumindest eine Federelement (37a, 37b) in der Betriebsposition in einem im wesentlichen elastisch entspannten Zustand befindet, wobei insbesondere die Kontaktvorrichtung (21) durch ein Sicherungselement (45) in der Initialposition festgelegbar ist und wobei sich das zumindest eine Federelement (37a, 37b) in der Initialposition in einem elastisch gespannten Zustand befindet.

8. Anschlußdose (7) nach Anspruch 7, wobei das zumindest eine Federelement als Verbindungselement (37a, 37b) ausgebildet ist und zwischen einem der Anschlußelemente (27a, 27b) und einem der Kontaktelemente (23a, 23b) angeordnet ist und dieses Anschlußelement (27a, 27b) mit dem Kontaktelement (23a, 23b) elektrisch und/oder mechanisch verbindet,
wobei bevorzugt zumindest eines der Kontaktelemente (23a, 23b), eines der Verbindungselemente (37a, 37b) und eines der Anschlußelemente (27a, 27b) zusammen einstückig ausgebildet sind.

9. Anschlußdose (7) nach einem der vorigen Ansprüche, wobei die Kontaktelemente (23a, 23b) eine durchgängige Ausnehmung (31) aufweisen, so daß die Kontaktelemente (23a, 23b) in der Betriebsposition durch ein Befestigungsmittel (47) an dem zugeordneten elektrischen Leiter (5a, 5b) des Solarmoduls (3) im Bereich der durchgängigen Ausnehmung festlegbar sind.

10. Anschlußdose (7) nach einem der vorherigen Ansprüche, wobei die Gehäusevorrichtung (9) zumindest zwei Verbinder (15, 17) aufweist, wobei die Anschlußelemente (27a, 27b) vorzugsweise jeweils einen Anschlußpol eines zugeordneten Verbinders (15, 17) ausbilden.

11. Anschlußdose (7) nach Anspruch 10, wobei die Anschlußdose (7) einen ersten Verbinder (15) aufweist, in welchen entlang einer ersten Einführrichtung (E1) ein erster komplementärer Verbinder einführbar ist und wobei die Anschlußdose einen zweiten Verbinder (17) aufweist, in welchen entlang einer zweiten Einführrichtung (E2) ein zweiter komplementärer Verbinder einführbar ist, wobei die erste (E1) und die zweite Einführrichtung (E2) einen Winkel kleiner als 180 Grad einschließen.

12. Verwendung einer Anschlußdose (7) gemäß einem der Ansprüche 1 bis 11 und eines Solarmoduls (3) zum Bereitstellen eines Solarpaneels (1), wobei die Anschlußdose (7) an dem Solarmodul (3) angeordnet wird, insbesondere an das Solarmodul (3) geklebt wird, wobei die Kontaktelemente (23a, 23b) der Kontaktvorrichtung (21) der Anschlußdose (7) jeweils mit den zugeordneten elektrischen Leitern (5a, 5b) des Solarmoduls (3) kontaktiert werden.

13. Solarpaneel (1) umfassend:
- ein Solarmodul (3) mit zumindest zwei elektrischen Leitern (5a, 5b), und
- eine Anschlußdose (7) gemäß den Ansprüchen 1 bis 11,
wobei die Anschlußdose (7) an dem Solarmodul (3) angeordnet ist und
wobei die Kontaktelemente (23a, 23b) der Kontaktvorrichtung (21) der Anschlußdose (7) jeweils mit den zugeordneten elektrischen Leitern (5a, 5b) des Solarmoduls (3) kontaktiert sind.

14. Verfahren zum Herstellen eines Solarpaneels (1) mit den Schritten:
- Bereitstellen einer Anschlußdose (7) gemäß einem der Ansprüche 1 bis 11 in einer Initialposition;
- Bereitstellen eines Solarmoduls (3) mit zumindest zwei elektrischen Leitern (5a, 5b);
- Aktivieren eines Haftmittels an der Anschlußdose (7) und/oder an dem Solarmodul (3);
- Anordnen der Anschlußdose (7) an einer Fläche des Solarmoduls (3); und
- Verlagern von Kontaktelementen (23a, 23b) der Kontaktvorrichtung (21) der Anschlußdose (7) von der Initialposition in die Betriebsposition, so daß die Kontaktelemente (23a, 23b) der Kontaktvorrichtung (21) die zugeordneten elektrischen Leiter (5a, 5b) des Solarmoduls (3) kontaktieren und insbesondere daran befestigt werden.

## Claims

1. A connection socket (7) for a solar module (3), comprising:
- a housing device (9), wherein
-- the housing device (9) is designed to be arranged with an arrangement side (13) on the solar module (3) and
-- the housing device (9) has at least one receiving device (11),
- at least one contact device (21) with
-- at least two contact elements (23a, 23b) and
-- at least one diode (25), which electrically contacts the at least two contact elements (23a, 23b),
wherein the at least one contact device (21) is received at least in sections in the receiving device (11) and wherein the contact elements (23a, 23b) of the contact device (21) are displaceable along a displacement direction (V), which forms an angle of less than 90 degrees with the normal vector of the arrangement side,
**characterized in that**
the contact elements (23a, 23b) are arranged in an initial position in the complete interior of the receiving device (11), wherein the contact elements (23a, 23b) are displaceable starting from the initial position to an operating position through the plane of the arrangement side (13).

2. The connection socket (7) according to claim 1, wherein the displacement direction (V) is mainly perpendicular on the arrangement side (13).

3. The connection socket (7) according to any one of the preceding claims, wherein each of the contact elements (23a, 23b) of the contact device (21) is designed to contact an associated electrical conductor (5a, 5b) of the solar module (3) in the operating position.

4. The connection socket (7) according to any one of the preceding claims, wherein the at least one diode (25) is displaceable with respect to the operating position starting from the initial position mainly linearly along the displacement direction V.

5. The connection socket (7) according to any one of the preceding claims, wherein the receiving device (11) has at least one guide element (33) and the contact device (21) has at least one complementary guide element (35), wherein the at least one guide element (33) engages with an associated complementary guide element (35) in the initial position and in the operating position.

6. The connection socket (7) according to any one of the preceding claims, wherein the contact device (21) has at least two connection elements (27a, 27b), wherein the at least two connection elements (27a, 27b) are arranged in particular fixed in the housing device (9).

7. The connection socket (7) according to any one of the preceding claims, wherein the contact device (21) has at least one spring element (37a, 37b), which comprises a resilient, elastically malleable material, wherein the at least one spring element (37a, 37b) is located in the initial position in a mainly elastically unstressed state or wherein the at least one spring element (37a, 37b) is located in the operating position in a mainly elastically unstressed state, wherein in particular the contact device (21) is fixable in the initial position by a retaining element (45) and wherein the at least one spring element (37a, 37b) is located in the initial position in an elastically stressed state.

8. The connection socket (7) according to claim 7, wherein the at least one spring element is designed as joining element (37a, 37b) and is arranged between one of the connection elements (27a, 27b) and one of the contact elements (23a, 23b) and this connection element (27a, 27b) is electrically and/or mechanically connected with the contact element (23a, 23b), wherein preferably at least one of the contact elements (23a, 23b), one of the joining elements (37a, 37b) and one of the connection elements (27a, 27b) are designed together as one piece.

9. The connection socket (7) according to any one of the preceding claims, wherein the contact elements (23a, 23b) have a continuous recess (31) so that the contact elements (23a, 23b) are fixable in the operating position by a fastening means (47) on the associated electrical conductor (5a, 5b) of the solar module (3) in the area of the continuous recess.

10. The connection socket (7) according to any one of the preceding claims, wherein the housing device (9) has at least two connectors (15, 17), wherein each of the connection elements (27a, 27b) preferably form a connection terminal of an associated connector (15, 17).

11. The connection socket (7) according to claim 10, wherein the connection socket (7) has a first connector (15), into which a first complementary connector is insertable along a first insertion direction (E1) and wherein the connection socket has a second connector (17), into which a second complementary connector is insertable along a second insertion direction (E2), wherein the first (E1) and the second insertion direction (E2) form an angle of less than 180 degrees.

12. Use of a connection socket (7) according to one of claims 1 through 11 and of a solar module (3) for providing a solar panel (1), wherein the connection socket (7) is arranged on the solar module (3), in particular joined to the solar module (3) with adhesive, wherein each of the contact elements (23a, 23b) of the contact device (21) of the connection socket (7) are contacted with the associated electrical conductors (5a, 5b) of the solar module (3).

13. A solar panel (1) comprising:
- a solar module (3) with at least two electrical conductors (5a, 5b) and
- a connection socket (7) according to claims 1 through 11,
wherein the connection socket (7) is arranged on the solar module (3) and wherein each of the contact elements (23a, 23b) of the contact device (21) of the connection socket (7) are contacted with the associated electrical conductors (5a, 5b) of the solar module (3).

14. A method for manufacturing a solar panel (1) with the steps:
- provision of a connection socket (7) according to one of claims 1 through 11 in an initial position;
- provision of a solar module (3) with at least two electrical conductors (5a, 5b);
- activation of an adhesive agent on the connection socket (7) and/or on the solar module (3);
- arrangement of the connection socket (7) on a surface of the solar module (3) and
- displacement of contact elements (23a, 23b) of the contact device (21) of the connection socket (7) from the initial position into the operating position so that the contact elements (23a, 23b) of the contact device (21) contact the associated electrical conductors (5a, 5b) of the solar module (3) and are in particular fastened on it.

## Revendications

1. Boîte de jonction (7) pour un module solaire (3), comprenant :
- un dispositif de boîtier (9), dans laquelle
-- le dispositif de boîtier (9) est conçu pour être monté avec un côté montage (13) sur le module solaire (3), et
-- le dispositif de boîtier (9) comporte au moins un moyen d'admission (11),
- au moins un moyen de contact (21), avec
-- au moins deux éléments de contact (23a, 23b) et
-- au moins une diode (25) mettant en contact les au moins deux éléments de contact (23a, 23b),
dans laquelle l'au moins un moyen de contact (21) est au moins partiellement admis dans le moyen d'admission (11), et dans laquelle les éléments de contact (23a, 23b) du moyen de contact (21) sont déplaçables le long d'une direction de déplacement (V) formant un angle inférieur à 90 degrés avec le vecteur normal du côté montage,
**caractérisée en ce que**
dans la position initiale, les éléments de contact (23a, 23b) sont disposés complètement à l'intérieur du moyen d'admission (11), les éléments de contact (23a, 23b) pouvant être déplacés de la position initiale vers une position de service à travers le plan du côté montage (13).

2. Boîte de jonction (7) selon la revendication 1, dans laquelle la direction de déplacement (V) s'étend essentiellement perpendiculairement au côté montage (13).

3. Boîte de jonction (7) selon l'une des revendications précédentes, dans laquelle chacun des éléments de contact (23a, 23b) du moyen de contact (21) est conçu pour être mis en contact avec un conducteur électrique (5a, 5b) correspondant du module solaire (3), dans la position de service.

4. Boîte de jonction (7) selon l'une des revendications précédentes, dans laquelle l'au moins une diode (25) peut être déplacée de la position initiale vers la position de service, de façon quasiment linéaire le long de la direction de déplacement (V).

5. Boîte de jonction (7) selon l'une des revendications précédentes, dans laquelle le moyen d'admission (11) comporte au moins un élément de guidage (33) et le moyen de contact (21) comporte au moins un élément de guidage (35) complémentaire, dans laquelle, dans la position initiale et dans la position de service, l'au moins un élément de guidage (33) est en prise avec un élément de guidage (35) complémentaire correspondant.

6. Boîte de jonction (7) selon l'une des revendications précédentes, dans laquelle le moyen de contact (21) comporte au moins deux éléments de jonction (27a, 27b), dans laquelle les au moins deux éléments de jonction (27a, 27b) sont en particulier agencés fixement dans le dispositif de boîtier (9).

7. Boîte de jonction (7) selon l'une des revendications précédentes, dans laquelle le moyen de contact (21) comporte au moins un élément élastique (37a, 37b) comprenant un matériau résilient élastiquement déformable, dans laquelle l'au moins un élément élastique (37a, 37b) se trouve dans un état quasiment détendu élastiquement dans la position initiale, ou dans laquelle l'au moins un élément élastique (37a, 37b) se trouve dans un état quasiment détendu dans la position de service, dans laquelle en particulier le moyen de contact (21) peut être bloqué dans la position initiale par un élément de blocage (45), et dans laquelle l'au moins un élément élastique (37a, 37b) se trouve dans un état tendu élastiquement dans la position initiale.

8. Boîte de jonction (7) selon la revendication 7, dans laquelle l'au moins un élément élastique (37a, 37b) est conçu comme un élément de liaison (37a, 37b) et agencé entre l'un des éléments de jonction (27a, 27b) et l'un des éléments de contact (23a, 23b), tout en reliant cet élément de jonction (27a, 27b) de façon électrique et/ou mécanique à l'élément de contact (23a, 23b),
dans laquelle au moins l'un des éléments de contact (23a, 23b), l'un des éléments de liaison (37a, 37b) et l'un des éléments de jonction (27a, 27b) sont de préférence conçus ensemble en un seul bloc.

9. Boîte de jonction (7) selon l'une des revendications précédentes, dans laquelle les éléments de contact (23a, 23b) comportent un évidement traversant (31), de sorte que dans la position de service, les éléments de contact (23a, 23b) peuvent être fixés par un moyen de fixation (47) au conducteur électrique (5a, 5b) correspondant du module solaire (3), dans la région de l'évidement traversant.

10. Boîte de jonction (7) selon l'une des revendications précédentes, dans laquelle le dispositif de boîtier (9) comporte au moins deux connecteurs (15, 17), dans laquelle les éléments de jonction (27a, 27b) forment de préférence un pôle de jonction respectif d'un connecteur (15, 17) correspondant.

11. Boîte de jonction (7) selon la revendication 10, dans laquelle la boîte de jonction (7) comporte un premier connecteur (15), dans lequel peut être introduit un premier connecteur complémentaire, le long d'une première direction d'introduction (E1), et dans laquelle la boîte de jonction comporte un deuxième connecteur (17), dans lequel peut être introduit un connecteur complémentaire, le long d'une deuxième direction d'introduction (E2), dans laquelle la première (E1) et la deuxième direction d'introduction (E2) forment un angle inférieur à 180 degrés.

12. Utilisation d'une boîte de jonction (7) selon l'une des revendications 1 à 11 et d'un module solaire (3) pour la mise à disposition d'un panneau solaire (1), dans laquelle la boîte de jonction (7) est montée sur le module solaire (3), en particulier collée sur le module solaire (3), dans laquelle les éléments de contact (23a, 23b) du moyen de contact (21) de la boîte de jonction (7) sont mis respectivement en contact avec les conducteurs électriques (5a, 5b) correspondants du module solaire (3).

13. Panneau solaire (1) comprenant :
- un module solaire (3) avec au moins deux conducteurs électriques (5a, 5b), et
- une boîte de jonction (7) selon les revendications 1 à 11,
dans lequel la boîte de jonction (7) est montée sur le module solaire (3), et
dans lequel les éléments de contact (23a, 23b) du moyen de contact (21) de la boîte de jonction (7) sont respectivement en contact avec les conducteurs électriques (5a, 5b) correspondants du module solaire (3).

14. Procédé pour la fabrication d'un panneau solaire (1) avec les étapes suivantes :
- mise à disposition d'une boîte de jonction (7) selon l'une des revendications 1 à 11, dans une position initiale ;
- mise à disposition d'un module solaire (3) avec au moins deux conducteurs électriques (5a, 5b) ;
- activation d'un agent adhésif sur la boîte de jonction (7) et/ou sur le module solaire (3) ;
- agencement de la boîte de jonction (7) sur une surface du module solaire (3) ; et
- déplacement des éléments de contact (23a, 23b) du moyen de contact (21) de la boîte de jonction (7), de la position initiale vers la position de service, de manière à ce que les éléments de contact (23a, 23b) du moyen de contact (21) soient en contact avec les conducteurs électriques (5a, 5b) correspondants du module solaire (3), tout en étant en particulier fixés à ceux-ci.
